(19) Europäisches Patentamt

European Patent Office

Office européen des brevets

(11) **EP 1 662 296 A1**

(12) **EUROPEAN PATENT APPLICATION**
published in accordance with Art. 158(3) EPC

(43) Date of publication:
**31.05.2006 Bulletin 2006/22**

(51) Int Cl.:
*G02F 1/01* (1974.07)    *G02F 1/13* (1974.07)
*G02B 21/00* (1968.09)   *G01N 21/64* (1980.01)

(21) Application number: **04772599.9**

(22) Date of filing: **01.09.2004**

(86) International application number:
**PCT/JP2004/012643**

(87) International publication number:
**WO 2005/024497 (17.03.2005 Gazette 2005/11)**

(84) Designated Contracting States:
**AT BE BG CH CY CZ DE DK EE ES FI FR GB GR HU IE IT LI LU MC NL PL PT RO SE SI SK TR**

(30) Priority: **05.09.2003 JP 2003314820**

(71) Applicant: **KAWASAKI JUKOGYO KABUSHIKI KAISHA**
**Kobe shi, Hyogo 650-8670 (JP)**

(72) Inventors:
• **MURO, Mikio**
  **Kobe-shi, Hyogo 6580073 (JP)**
• **HAZAMA, Hisanao**
  **Kakogawa-shi, Hyogo 6750111 (JP)**
• **TAKATANI, Yoshiaki**
  **Kobe-shi, Hyogo 6580073 (JP)**

(74) Representative: **GROSSE BOCKHORNI SCHUMACHER**
**Forstenrieder Allee 59**
**81476 München (DE)**

(54) **OPTICAL CONTROL DEVICE AND OPTICAL CONTROL METHOD**

(57) An optical control system receives an incident light wave containing a plurality of wavelength components and is capable of giving different spatial light intensity distributions respectively to the wavelength components and of easily changing the color characteristic of an outgoing light wave. The optical control system is applied to illumination systems and light sources for displays, and to a method and an apparatus for process control using such modulated light. The optical control system receives a linearly polarized light wave as an incident light wave 1 containing a plurality of wavelength components, gives different polarization plane rotation angles respectively to the wavelength components by a wavelength dispersion azimuth rotator 3, gives the plane of polarization of the incident light wave 1 an optional optical rotation angle spatial distribution by a spatial light modulator 5, and emit an outgoing light wave containing wavelength components respectively having different spatial light intensity distributions by an analyzer 7.

FIG. 1

# Description

TECHNICAL FIELD

The present invention relates to a new spatial light modulating system capable of giving different spatial light intensities respectively to the component waves of incident light and of readily changing the color characteristic of outgoing light, to the application of the spatial light modulating system to illumination systems and light sources for displays, and to a method and an apparatus for process control using such modulated light.

BACKGROUND ART

Techniques for changing the color characteristic of light emitted by a light source can be applied not only to illumination systems and light sources for displays but also to many uses including laser machining, laser plasma x-ray generation and laser fluorescent microscopes. It is expected that a method capable of providing many kinds of color characteristics in a wide spectral range can be applied to a wide variety of industrial fields. Known techniques provide light waves of different color characteristics by using a plurality of light sources respectively capable of emitting light waves of different color characteristics, changing the respective intensities of the light waves individually and mixing the intensity-modified light waves or by passing white light wave through a plurality of different color filters.

The method of providing light waves of different color characteristics by using a plurality of light sources, individually modulating the intensities of light waves and mixing the intensity-modulated light waves needs a complicated apparatus. The method using the color filters has difficulty in changing many kinds of color characteristics. Thus a highly flexible method capable of simply changing the color characteristic of a light wave emitted by a light source for one of many kinds of color characteristics has been desired.

A simple method has been desired to provide a spatial distribution of light waves of desired different wavelengths through the optical pulse shaping of a laser beam consisting of light waves of different wavelengths.

A coherent laser beam can be focused in a diameter on the order of its wavelength by an optical condenser system. The coherent laser beam having such a characteristic and capable of propagating at an ultrahigh propagation speed equal to the light velocity of 300,000 km/s is applied to controlling various precision high-speed processes. In laser plasma x-ray generating processes and laser machining processes, the intensity of x-rays, machining efficiency or accuracy are dependent on many parameters including the wavelength, spatial intensity distribution and waveform of the laser beam.

For example, the temperature and density of a plasma produced by a laser plasma x-ray generation process vary in a complicated mode with time and in space in a short time. Therefore, light capable of accurately controlling the temperature of the plasma according to the spatial and temporal development of the laser plasma must be used for irradiation to generate x-rays of a specific wavelength efficiently and to keep the laser plasma at an optimum temperature.

Particularly, when a pulse laser that emits laser pulses of a narrow pulse width is used, a plasma of a ultrahigh temperature is generated when condensed high-intensity laser pulses of a narrow pulse width is applied to a target in a vacuum and a plasma region of micrometers expands at a high speed in the range of several tens to several hundreds kilometers per second. Therefore, a control method effective in a very short time range is needed.

Therefore, the light for controlling the plasma is required to achieve accurate control to keep the electron temperature of the plasma spatially and temporally at an optimum temperature in, for example, laser plasma x-ray generation and to make a reaction process approach an optimum path.

The reaction process can be made to approach an optimum path by controlling temporal pulse waveform and spatial light intensity distribution. However, it has been difficult to control spatial light intensity distribution and temporal pulse waveform simultaneously. Particularly, in a region of control where the response speed limit of liquid crystal is on the order of microseconds, the simultaneous control of the spatial light intensity distribution and temporal laser beam waveform needs a large, complicated apparatus and is very difficult.

For example, a method of shaping pulses of laser light having a plurality of wave components of different wavelengths uses a tunable laser and spatial light modulator in combination. The tunable laser make a laser medium having a wide optical amplification wavelength band oscillate at a specific wavelength selected by a wavelength selecting filter, such as a diffraction grating or a prism. A diffraction grating having an acoustooptic device can be made to perform high-speed response wavelength light pulse oscillation by electrically controlling the diffraction grating.

When a laser beam emitted by a tunable laser is divided into component laser beams by wavelength by a dichroic mirror or the like, the component laser beams are passed through spatial light modulators respectively having different modulation patterns for specific wavelengths and the modulated component laser beams are mixed, different spatial light intensity distribution can be given to light pulses of different wavelengths.

Wavelength changing speed is dependent on the wavelength changing speed on the order of microseconds at the highest of the optical wavelength filter or on the wavelength changing speed on the order of milliseconds of the spatial light modulator. Therefore, the changing speed of the spatial light intensity distribution determined by the combination of those elements cannot be shorter than milliseconds as a factor of rate control.

A method of modulating phases of the wavelength components of a very short light pulse is mentioned in Reference 1. This method applies a very-short light pulse to one of two paired diffraction gratings, separates the light pulse by wavelength on the basis of the diffraction angle dispersion characteristic of the diffraction grating, collimates the wavelength components dispersed by diffraction angle by a lens so that the optical axes are parallel, inserts a liquid crystal spatial light modulator in a Fourier plane formed by spectral development in a direction perpendicular to the optical axis, focuses the wavelength components passed through the light modulator by a lens on the other diffraction grating for optical synthesis to produce an outgoing light pulse having an adjusted relative phase as temporal positions for wavelength.

The temporal pulse waveform can be optionally changed in an ultrashort time by an acoustooptic adjustable dispersion filter (AOPDF). According to this paper, experiments compressed an ultrashort light pulse of 30 fs to provide an ultrashort light pulse of 17 fs.

Those methods give the same spatial light intensity distribution patterns for all the wavelength components. Thus those methods have a low degree of freedom of optical adjustment and cannot give different light intensity distribution patterns to the wavelength components.

A temporal pulse waveform shaping method of the Mach-Zehnder interferometry system is mentioned in Patent document 1. This temporal pulse waveform shaping method divides a short laser light pulse into a primary pulse and a secondary pulse by a beam splitter, delays the primary or the secondary pulse by an optical delay circuit to provide a two-pulse laser beam and irradiates a metal target with the two-pulse laser beam to generate x-rays. This temporal pulse waveform shaping method is able to adjust the interval between the pulses and the respective optical intensities of the primary and the secondary pulse individually. However, nothing about using pulses different from each other in wavelength is disclosed and mentioned in Patent document 1.

A pulse generating method mentioned in Reference 3 generates high-intensity laser light pulses of femtoseconds having a polarization state subject to change with time. This pulse generating method divides an incoming laser light pulse generated by a chirp pulse amplification method into a reference light wave and a signal light wave by a beam splitter. The reference light wave is polarized into a 45° linearly polarized light wave having an x- and a y-component by a half-wave plate to fix the delay time of the reference light wave relative to the signal light wave. The signal light wave is made to fall on an interferometer to generate a time-dependent polarized light pulse. The time-dependent polarized light pulse is combined coaxially with the reference light wave at relative delay time by a beam splitter and are divided into an x- and a y-component by a polarizer (polarization beam splitter). A spectroscope receives the x- and the y-component and generates a spectral interference signal of the x- and the y-component. Thus a pulse having a time-dependent polarization characteristic can be generated by dividing the high-intensity laser light pulse of femtoseconds by an interferometer to delay one of the components of the polarized light relative to the other, and multiplexing the components of different phases again.

This method, however, cannot adjust the spatial light intensity distribution and hence cannot provide a laser beam that enables processing of a high degree of freedom using wavelengths of different light intensities.

A light pulse control method previously proposed by the inventors of the present invention in Jpn. Pat. App. No. 2002-073365 divides a short-pulse laser beam into two laser beams by a half mirror, develops an optical path difference between the two laser beams by an optical delay circuit, and adjusts spatial light intensity distributions of the laser beams on the optical paths by a deformable mirror.

A series of sheet-form light pulses provided with a plurality of kinds of spatial light intensity distributions must be prepared and irradiation must be performed at proper time intervals in a short time to control the temperature of a temporally and spatially developing laser plasma so that a reaction process approaches an optimum path to generate x-rays of a specific wavelength. Therefore, an optical apparatus built by combining a plurality of optical systems like an optical system disclosed in Jpn. Pat. App. No. 2002-073365 is needed. However, such an optical system is large and complicated.

An alignment-free optical demultiplexer mentioned in Patent document 2 does not have any mechanical drivers and employs a Faraday rotator, a TN (twisted nematic) liquid crystal and an analyzer. This optical demultiplexer produces a polarization direction difference of 90° between two linearly polarized light waves which are used for optical communication, namely, a linearly polarized light wave of 1.3 $\mu$m in wavelength and a linearly polarized light wave if 15 $\mu$m in wavelength and separates the linearly polarized light waves by the analyzer. This invention does not have any technical idea of increasing the degree of freedom of optical control by adjusting spatial light intensity distribution simply by changing the two wavelength components.

An optical isolator mentioned in Patent document 3 employs a Faraday rotator, a TN liquid crystal and an analyzer. This optical isolator has an optically active liquid crystal rotator and a Faraday rotator placed between a polarizer that transmits a specific linearly polarized light wave and an analyzer. The Faraday rotator rotates a polarization plane in the same direction regardless of the direction of travel of the light wave. Therefore, when the Faraday rotator is adjusted so as to transmit a forward light wave, the polarizing plate intercepts a backward light wave. This optical isolator is a device for passing and stopping optical communication signals and does not have any idea of adjusting spatial light intensity distribution.

None of the light modulators based on the prior art derives various color characteristics from a light source and gives desired spatial light intensity distributions for a plurality of different wavelength components. There has not been any means for giving different spatial light intensity distributions for wavelength components at a time difference of milliseconds. To achieve the ideally precise control of a process, it is preferable to set optimum spatial light intensity distributions for wavelength components by using a light wave consisting of a plurality of wavelength components and to set phase differences optionally for wavelength components.

Active studies have been made in recent years for the measurement and control of chemical processes using ultrashort light pulses. Studies are being made at present for the quantum control of chemical reaction processes and the control of laser plasma x-ray ultrahigh-speed processes using ultrashort light pulses. It is apparent that further accurate process control can be achieved if both the light pulse structures of a temporal region and a spatial region can be simultaneously controlled.

When it is desired to control a temporal characteristic and a spatial characteristic simultaneously, as regards an ultrashort light pulse temporal region, the response speed of the known method using the spatial light modulator employing the liquid crystal or the known method using the deformable mirror is not sufficiently high. Therefore, a conventionally used method combines pulse strings respectively having different spatial light intensity distributions by a system including an optical delay circuit and a spatial light intensity distribution control optical system in combination.

A representative one of such optical system was applied to an ultrahigh resolution fluorescent microscope of an STED system (stimulated emission depletion system) reported by S.W. Hell of Finland in 1994. The application of the optical system to the ultrahigh resolution fluorescent microscope of an STED system is a special example which is satisfactory when two light waves have intensity distributions. To make the application of the optical system to a wide variety of uses possible, many kinds of light intensity distributions need to be developed on a time axis. Thus, problems in the dimensions, efficiency and costs of the optical system make the practical application of the optical system impossible.

Patent document 1: JP 08-213292 A
Patent document 2: JP 10-161064 A
Patent document 3: JP 05-214400 A

Reference 1: Kaminari Fumihiko, et al., "Femtosecond Laser Pulse Shaping by Adaptive Control and Application to Optical Pumping", Reiza Kenkyu, pp. 479-485, Aug., 2000
Reference 2: F. Verluise, et al., "Amplitude and Phase Control of Ultrashort Pulses by Use of an acousto-optic Programmable Dispersive Filter: Pulse compression and Shaping:, OPTICS LETTERS, Vol. 25, No. 8, pp. 575-577, April 15, 2000, Optical Society of America
Reference 3: Kakehata Masanosuke, "Generation of High-intensity Femtosecond Laser Pulses Having Polarization State Changing with Time", Reiza Gakkai Gijutsu Koen-kai, 22nd Nenji Taikai Koen Yokou-shyu, pp. 13-14, Jan., 2002

DISCLOSURE OF THE INVENTION

It is a first object of the present invention to provide a simple optical apparatus and a method capable of easily producing light waves of a plurality of color characteristics by continuously changing the color characteristic of a light wave emitted by a light source in a wide range.

A second object of the present invention is to provide a laser pulse control method capable of simultaneously and precisely adjusting spatial intensity distributions and temporal waveforms for wavelength components of laser light in a range of time intervals of a millisecond or below exceeding the limit of response speed of optical switching of a ferroelectric liquid crystal, and a simple optical apparatus for carrying out the laser pulse control method.

A third object of the present invention is to provide an optical apparatus provided with an adjusting mechanism for adjusting laser light to achieve precisely process control, such as the selective control of the intensity of x-rays of a specific wavelength when various materials or specimens are irradiated with a laser beam to generate laser plasma x-rays, and an optical control method to be carried out by the optical apparatus.

A fourth object of the present invention to provide an apparatus provided with a simple optical system capable of generating fluorescence exciting light and fluorescence suppressing light for an ultrahigh-resolution scanning laser fluorescence microscope of a STED system, and an optical control method.

An optical control system in a first aspect of the present invention includes: an optical rotatory device having an optical rotatory dispersion characteristic that changes optical rotation angle according to wavelength; an analyzer; and a spatial light modulator capable of changing the optical rotation angle of the polarization plane of an incident light wave by the entire region of an entrance surface or by parts of the entrance surface; wherein the optical rotatory device, the spatial light modulator and the analyzer are arranged so that the incident light wave passes the azimuth rotator, the spatial light modulator and the analyzer in that order.

The optical control system of the present invention receives a linearly polarized light wave including wavelength components, passes the linearly polarized light wave through the optical rotatory device to divide linearly polarized light wave into the wavelength components respectively having different optical rotation angles, makes light passed through the optical rotatory device fall on the spatial light modulator with the entire entrance surface or with parts of the entrance surface adjusted to an optical rotatory power corresponding to the optical rotation angle of one of the wavelength components, adjusts the optical rotation angles of the polarization planes of the wavelength components so as to be in a predetermined relation with the direction of the analyzer, and passes the light wave through the analyzer to emit an outgoing light wave including wavelength components respectively having spatial light intensities.

The optical rotatory device having an optical rotatory dispersion characteristic that changes optical rotation angle according to wavelength is an optical rotatory device made of a natural optical rotatory material containing an optically active substance, such as a quartz crystal or a TN liquid crystal or a Faraday rotator.

A quartz crystal and a TN liquid crystal have optical rotatory power only in a specific direction. When the traveling direction of a light wave is reversed, the rotating direction of the polarization plane is reversed. Therefore, when a light wave passed through the foregoing substance in one direction passes the substrate in the opposite direction, the polarization plane of the light wave coincides with the initial polarization plane. While the optical rotatory power of the quartz crystal is scarcely subject to the influence of an electric field and a magnetic field, the optical rotatory power of the TN liquid crystal changes according to the field strength of an electric field applied to the TN liquid crystal. An isotropic substance, such as a scroll solution, exerts optical rotatory power on a light wave traveling therethrough in an optional direction.

The faraday rotator uses the Faraday effect, i.e., the rotation of the plane of vibration of light when the light passes through a substance. According to the Faraday effect, the rotation angle of the plane of vibration is proportional to the product of the strength H of the magnetic field, the length L of a pass of light in a substance and the cosine of angle $\phi$ between the direction of propagation of light and the magnetic field when the substance is nonmagnetic. The proportional constant V is called Verdet's constant. The proportional constant V is dependent on the quality of the substance and wavelength. When the substance is magnetic, the angle of Faraday rotation is not proportional to the magnetic field but proportional to magnetization.

The Faraday rotator is characterized in that the direction of rotation of the polarization plane does not change when the traveling direction of light is reversed. The optical isolator mentioned in Patent document 3 utilizes this characteristic that does not change the direction of rotation of the polarization plane when the traveling direction of light is changed.

The optical rotatory dispersion characteristic of most Faraday rotators is stronger than that of rotators using a natural optically active substance. The optical rotatory device using a bismuth-iron garnet crystal ($Bi_3Fe_5$ crystal), in particular, has high optical rotatory power. When a light wave of a wavelength in the range of 700 to 800 nm is passed through a bismuth-iron garnet crystal in the state of saturation magnetization in the direction of a magnetic field, a polarization plane rotation deviation of about 18,000° per one centimeter of the length of the propagation path of the light wave is produced. Therefore, if the crystal has a thickness of 50 $\mu$m, a magnetic rotatory dispersion for the wavelength is on the order of 90°.

When an incident light wave is passed first through a polarizer, the light wave becomes a light wave having a predetermined polarization plane even if the incident light wave is not a linearly polarized light wave. Therefore, the light wave can be processed similarly to a linearly polarized light wave as mentioned in connection with the description of the optical control system of the present invention.

A TN liquid crystal is a representative example of the spatial light modulator included in this optical control system that changes the polarization angle of the incident light wave by rotation. The TN liquid crystal exercises a twisted nematic effect.

The TN liquid crystal is a TN cell formed by sandwiching an about 10 $\mu$m thick layer of a nematic liquid crystal of a positive dielectric anisotropy between two glass substrates provided with transparent electrodes so that the major axes of liquid crystal molecules are twisted continuously through an angle of 90° between the two substrates. The pitch of twist of the TN cells is sufficiently long as compared with the wavelength of visible light. Therefore, the direction of polarization of an incident linearly polarized light wave fallen perpendicularly to the substrates rotates through 90° according to the twist of the liquid crystal molecules as the linearly polarized light wave travels through the layer of the TN liquid crystal. Thus the incident light wave is rotated through 90°. When a voltage is applied to the TN cell, the major axes of the liquid crystal molecules start turning in the direction of an electric field as the voltage increases beyond a threshold voltage $V_{th}$. The TN cell saturates at a voltage about twice the threshold voltage $V_{th}$. Since the optical rotation angle of the incident linearly polarized light wave is dependent on the twist of the liquid crystal molecules, the optical rotation angle approaches 0° as the voltage increases. Thus the optical rotation angle of the incident linearly polarized light wave can be adjusted by adjusting the voltage applied to the liquid crystal cell.

Minute cells, to which adjusting voltages are applied individually, of a liquid crystal device can be formed in a close arrangement by forming transparent electrodes by a circuit printing technique. Therefore, zones defined by properly dividing a surface on which the incident linearly polarized light wave falls can determine proper optical rotation angles for polarization planes, respectively.

When a light wave containing wavelength components respectively having different polarization plane rotation angles falls on this liquid crystal device, the polarization plane rotation angles determined by the zones of the entrance surface are added to the polarization plane rotation angles of the wavelength components respectively having different wavelengths. Consequently, a wavelength component having a total polarization angle coinciding with the direction of a transmission polarization plane emerges as an outgoing light wave from the optical control system.

Thus a part of the entrance surface of the liquid crystal device determines the outgoing wavelength component and the TN liquid crystal device functions as a spatial light modulator. The inclination of the polarization plane of a light wave passed through the spatial light modulator does not coincide with the direction of a transmission polarization plane of the analyzer, the quantity of light that passes the analyzer varies according to the difference between the inclination of the polarization plane of a light wave passed through the spatial light modulator and the direction of the transmission polarization plane of the analyzer. Thus the intensities of wavelength components of a light wave can be adjusted.

The optical control system in the first aspect of the present invention passes the incident linearly polarized light wave having a plurality of wavelength components through the optical rotator having optical rotatory dispersion, changes the polarization angles for wavelength components, and passes the light wave through the spatial light modulator having the polarization plane rotator having a single zone or a plurality of individual zones to adjust spatial light intensity distributions to predetermined patterns for the wavelength components.

The ability to determine spatial light intensity distributions for the wavelength components corresponds to an ability to determined spatial distributions for color characteristics. Therefore, various variations of the foregoing methods of illumination and displaying are possible.

The optical control system of the present invention combined with an optical device capable of controlling phases of wavelength components, namely, a wavelength phase modulator, is capable of adjusting the temporal light pulse waveform to a predetermined pattern simultaneously with the adjustment of spatial light intensity distribution patterns to predetermined patterns for wavelength components.

A light pulse shaping optical system called a Fourier light synthesis optical system is an example of the wavelength phase modulator. The Fourier light synthesis optical system includes a diffraction grating, an optical focusing system, a spatial light modulator, an optical focusing system and a diffraction grating arranged in that order at intervals corresponding to the focal distance of the optical focusing system. The diffraction grating decomposes an incident light wave including a plurality of wavelength components by spectral decomposition, the optical focusing system performs spectral development in a direction perpendicular to the optical axis, the spatial light modulator changes the optical path lengths of the wavelength components to adjust phase differences to predetermined values. The light wave passed through the diffraction grating, the optical focusing system and the spatial light modulator is passed through the optical focusing system and is converged in a light beam by the diffraction grating. Thus the Fourier light synthesis optical system provides a light beam containing the wavelength components developed on the time axis.

The spatial light intensity distributions of the wavelength components of the light wave can be precisely adjusted and the temporal waveform can be adjusted by using the wavelength phase modulator in combination with the optical rotator or the spatial light modulator. The optical control system of the present invention can be easily built by assembling a plurality of optical devices. The temporal and spatial construction of light, namely, the spatial light intensity distribution and temporal waveform, can be easily and accurately controlled by the optical control system of the present invention.

An optical control system in a second aspect of the present invention includes: an optical rotatory device; and a spatial optical phase modulator capable of changing the phase of incident light by the entire region of an entrance surface or by parts of the entrance surface; wherein the incident light passes the optical rotatory device and the spatial optical phase modulator in that order.

The spatial optical phase modulator modulates the phase of only a polarized light wave polarized in a direction parallel to one of two perpendicularly intersecting coordinate axes perpendicular to its optical axis. The spatial optical phase modulator can be formed by using a nematic liquid crystal having liquid crystal molecules with their molecular axes oriented in the same direction.

A linearly polarized light wave having a plurality of wavelength components is passed through the optical rotatory device to make the wavelength components have specific optical rotation angles, respectively, and the light wave passed through the optical rotatory device is made to fall on the spatial optical phase modulator having an entrance surface having parts respectively having adjusted phase changes. Since the wavelength components have polarization planes of different inclinations, respectively, the wavelength components have different ratios between components polarized in directions parallel to two perpendicularly intersecting coordinate axes, and an outgoing light wave is a synthesized light wave of a wavelength component processed by spatial optical phase modulation and a wavelength component not processed by spatial optical phase modulation. When the outgoing light wave is focused by a focusing optical system, a far field pattern of wavelength components having different spatial light intensity distributions is formed.

The spatial optical phase modulator produces different phase delays by changing the optical path length of only a polarized component in a direction parallel to one of two coordinate axes defining a plane perpendicular to the optical axis of a light wave. The spatial optical phase modulator can employ a two-dimensional optical phase modulator using the anisotropic refractive index of a nematic liquid crystal.

The two-dimensional optical phase modulator is a liquid crystal device that controls only phase without entailing the rotation of a polarization plane by arranging liquid crystal molecules having an anisotropic refractive index with their major axes aligned with a direction perpendicular to the optical axis. When a voltage is applied across transparent electrodes spaced by a liquid crystal layer, the major axes of the liquid crystal molecules are inclined to the optical axis at an angle proportional to the voltage applied across the transparent electrodes and thereby phase delay of the light wave polarized in the direction of the major axes is changed. The phase of the wavelength components polarized in a direction perpendicular to the direction of the major axes of the liquid crystal molecules does not change even if the direction of the major axes is changed by the voltage applied across the transparent electrodes. The ratio between a polarized wavelength component parallel to the major axes of the molecules and a polarized wavelength component perpendicular to the major axes of the molecules of an incident linearly polarized light wave is dependent on the direction of polarization. Therefore, the phase delay is dependent on the polarization angle of the incident light wave. Phase delay is dependent also on the applied voltage.

Proper voltages are applied to two-dimensional positions on the spatial optical phase modulator, and a linearly polarized light wave having a plurality of wavelength components is passed through the azimuth rotator. Consequently, the polarization planes of the wavelength components of the incident linearly polarized light wave are rotated through different angles and the linearly polarized light wave falls on the spatial optical phase modulator on which a two-dimensional phase delay pattern is formed. An outgoing light wave emerging from the spatial optical phase modulator is a synthesized light wave including polarized wavelength components processed by spatial optical modulation according to different polarization angles for wavelengths corresponding to different voltages applied to positions on the entrance surface of the spatial optical phase modulator and polarized wavelength components not processed by spatial optical phase modulation in different ratios.

The wavelength components and the orthogonal polarized light components of a near field intensity distribution, namely, a near field pattern, formed on the exit surface of the spatial optical phase modulator and a light wave having a near field phase distribution interfere with each other in the focusing optical system and form a far field pattern having different light intensities for wavelength components and corresponding to the near field pattern at the focal point of the focusing optical system. Therefore, the spatial optical phase modulator is adjusted so as to produce a near field phase distribution suitable for forming a necessary far field pattern. A method of forming a far field pattern from a near field pattern and a near field phase distribution is established by wave optics and the far field pattern can be previously known through simulation and experiments.

Thus the spatial light intensity of the far field pattern can be controlled without passing the outgoing light wave through the analyzer when the spatial optical phase modulator is used and hence light energy can be efficiently used without attenuating the light wave.

If a polarizer is disposed above the optical rotor with respect to the direction of travel of a light wave, the polarization plane of a light wave incident on the optical rotatory device can be selectively determined and hence the same effect can be expected even if a light wave other than a linearly polarized light wave is used.

A process, such as a thermal reaction process for melting or evaporations, a nuclear reaction process, a plasma reaction process, a chemical reaction process, an isotope separation process or a fluorescent light emission process, can be caused by irradiating a matter with laser pulses having a plurality of wavelength components and produced by the temporal and spatial control of the temporal and spatial construction of light pulses. These processes are applied to the control of laser machining, synthesis, decomposition and separation of chemical substances and elements, production of atoms, molecules, ions, electrons, positrons, neutrons and clusters of particles, generation of electromagnetic radiations, such as x-rays and $\gamma$-rays, and emission of fluorescent light. Application of the foregoing techniques to industries, such as the semiconductor industry, the chemical industry, the energy industry, the medical industry and the machine industry, particle accelerators and basic studies, such as examination of biological substances, is expected.

The characteristic of x-rays can be precisely controlled through the adjustment of the spatial intensity distribution and temporal waveform of a laser beam by the optical control system of the present invention. Thus the optimum control of the foregoing processes can be achieved.

Since the spatial intensity distribution on a target and radiation time intervals of the laser beam can be properly controlled through the generation of x-rays by irradiating a target with a laser beam produced by the optical control of the present invention, the process can be minutely designed.

The wavelength characteristic, namely, the intensity characteristic, of x-rays may be measured and the intensity distribution and spatial optical phase distribution of a laser beam may be adjusted on the basis of the measured wavelength characteristic of x-rays of a desired wavelength. Preferably, the thus generated x-rays contain a large quantity of a proper wavelength component desired by the use of the generated x-rays. The intensity of x-rays of a desired wavelength may be measured and the spatial intensity distribution and the spatial optical phase distribution can be adjusted so that the intensity of the wavelength component may be high.

In a laser plasma x-ray generator, it is preferable that the spatial intensity distribution and pattern of a spot formed by focusing a laser beam on a part of a target correspond to a spatial light intensity distribution in which the energy of the leading end of a light pulse first arriving at the target is concentrated on a part corresponding to the center of an optical axis, and the spatial intensity distributions of a series of light pulses subsequently reaching the target are beams having diameters that increase as a laser plasma expands and having annular spatial distributions having a central part of a low light intensity and a peripheral part of a high light intensity. When the laser light pulses falling on the target have the foregoing spatial distribution and phase distribution, a laser plasma can be held at a electron temperature suitable for generating x-rays of a specific wavelength for a long time in a wide spatial region and x-rays of the desired wavelength can be efficiently generated.

The optical control system of the present invention is capable of generating a light wave having wavelength components having different predetermined spatial intensity distribution patterns by transforming a laser beam. Therefore, the light wave can be applied to an ultrahigh-resolution scanning laser fluorescence microscope of the STED system. A wavelength component of the same wavelength as a fluorescent light wave in a specimen in a broad-band spectrum is selected from a broad-band spectrum and is used for fluorescence suppression, and wavelength components of other wavelengths are used as fluorescence excitation light waves. Since the fluorescence excitation light waves and the fluorescence suppression light wave can be generated by the single optical system, the optical control system is simple.

An optical control method of the present invention includes the steps of: making a linearly polarized light wave containing a plurality of wavelength components fall on an optical rotatory device having an optical rotatory dispersion characteristic to determine different polarization angles for the wavelength components, respectively; passing the linearly polarized light wave passed through the optical rotatory device through a spatial light modulator to give an optical rotation angle to the entrance surface or optical rotation angles to parts of an entrance surface; and passing the linearly polarized light wave passed through the spatial light modulator through an analyzer to emit an outgoing light wave containing wavelength components respectively having controlled spatial light intensity distributions.

The optical control method may make a linearly polarized light wave containing the plurality of wavelength components fall on an azimuth rotator having an optical rotatory dispersion characteristic to give different polarization angles to the wavelength components, respectively; may pass the linearly polarized light wave passed through the azimuth rotator through a spatial optical phase modulator to change the spatial optical phase of the incident light wave on the entrance surface or the spatial optical phases of the incident light wave on parts of the entrance surface; and may emit an outgoing light wave containing wavelength components having controlled spatial light intensity distributions.

The optical control method of the present invention may include the step of adjusting the optical phases of the wavelength components by a wavelength phase modulator.

The phases, and the spatial light intensity distributions or the spatial optical phase distributions of the wavelength components of the outgoing light wave can be controlled by adjusting the optical phases of the wavelength components by the wavelength phase modulator simultaneously with the adjustment of spatial light intensities by the optical rotatory device, the spatial light modulator and the spatial optical phase modulator.

The optical control method may focus the outgoing light wave by a focusing optical system disposed so that the outgoing light wave may fall thereon.

The optical control method of the present invention can be applied to various illuminating methods, light sources for displays and process control methods by using the effect of combination of the wavelength components respectively having different spatial distributions.

BRIEF DESCRIPTION OF THE DRAWINGS

Fig. 1 is a block diagram of an optical control system in a first embodiment according to the present invention;
Fig. 2 is a graph showing the coefficient of chromatic dispersion of optical rotation angle in bismuth-iron garnet for wavelength;
Fig. 3 is a graph showing the dependence of optical rotation angle in a TN liquid crystal on voltage;
Fig. 4 is a diagrammatic view showing typical examples of optical rotation angle patterns;
Fig. 5 is a view of assistance in explaining the concept of giving wavelength components different spatial light intensity distributions by a spatial light modulator included in the optical control system in the first embodiment;
Fig. 6 is a block diagram of assistance in explaining a method of controlling the spatial light intensities of wavelength components by the optical control system in the first embodiment including a spatial light modulator;
Fig. 7 is a block diagram of assistance in explaining a control method to be carried out by an optical control system built by additionally providing the optical control system in the first embodiment with a polarizer;

Fig. 8 is a view of assistance in explaining the operations of an optical rotatory dispersion device and an analyzer;

Fig. 9 is a three-dimensional diagram of a Gaussian distribution type near field pattern in an example when the spatial distribution of polarization plane optical rotation angle is controlled by the first embodiment;

Fig. 10 is a three-dimensional diagram of a far field pattern corresponding to the near field pattern shown in Fig. 9 and obtained through simulation;

Fig. 11 is a sectional view of a near field pattern in another example;

Fig. 12 is a sectional view of a far field pattern corresponding to the near field pattern shown in Fig. 11;

Fig. 13 is a sectional view of a near field pattern in a third example;

Fig. 14 is a sectional view of a far field pattern corresponding to the near field pattern shown in Fig. 14;

Fig. 15 is a three-dimensional diagram of a sectional profile of a near field pattern;

Fig. 16 is a three-dimensional diagram of a sectional profile of a far field pattern corresponding to the near field pattern shown in Fig. 15;

Fig. 17 is a three-dimensional diagram of a near field pattern of primary Bessel function type when spatial distribution of polarization angles is controlled by the first embodiment;

Fig. 18 is a three-dimensional diagram of a far field pattern corresponding to the near field pattern shown in Fig. 17 and obtained through simulation;

Fig. 19 is a block diagram of an optical control system in a second embodiment according to the present invention;

Fig. 20 is a diagrammatic view of a Fourier light synthesis optical system;

Fig. 21 is a block diagram of assistance in explaining operations of the optical control system in the second embodiment;

Fig. 22 is a block diagram of an optical control system in a modification of the optical control system in the second embodiment;

Fig. 23 is a block diagram of assistance in explaining operations of an optical control system in a third embodiment according to the present invention;

Fig. 24 is a diagrammatic view of assistance in explaining the principle of forming a far field pattern from a near field pattern by a focusing optical system;

Fig. 25 is a three-dimensional diagram of a near field pattern formed by the third embodiment when an incident light wave is a plane wave;

Fig. 26 is a three-dimensional diagram of assistance in explaining phase rotation exerted on the incident light wave shown in Fig. 25;

Fig. 27 is a three-dimensional diagram of a far field pattern corresponding to the near field pattern shown in Fig. 25;

Fig. 28 is a sectional view of a section of the far field pattern shown in Fig. 27 in a plane including the axis of the far field pattern shown in Fig. 27;

Fig. 29 is a sectional view of a far field pattern when the polarization angle of an incident light wave fallen on the optical control system in the third embodiment is 20°;

Fig. 30 is a sectional view of a far field pattern when the polarization angle of an incident light wave fallen on the optical control system in the third embodiment is 90°;

Fig. 31 is a three-dimensional diagram of another near field pattern formed by the optical control system in the third embodiment;

Fig. 32 is a three-dimensional diagram of a far field pattern corresponding to the near field pattern shown in Fig. 31;

Fig. 33 is a three-dimensional diagram showing the variation of a near field pattern of Gaussian function distribution type with the polarization angle of an incident light wave;

Fig. 34 is a three-dimensional diagram of a far field pattern formed by focusing the near field pattern shown in Fig. 33 by a focusing optical system on the focal point of the focusing optical system;

Fig. 35 is a block diagram of an optical control system in a fourth embodiment according to the present invention;

Fig. 36 is a bock diagram of an optical control system in a fifth embodiment according to the present invention;

Fig. 37 is a block diagram of the optical control system shown in Fig. 36 including a spatial optical phase modulator;

Fig. 38 is a block diagram of an optical control system in a fifth embodiment according to the present invention;

Fig. 39 is a block diagram of the optical control system shown in Fig. 38 including a spatial optical phase modulator;

Fig. 40 is a diagram of assistance in explaining change of laser plasma electron temperature when an optical control system in a sixth embodiment according to the present invention is used;

Fig. 41 is a diagrammatic view of assistance in explaining the mechanism of an ultrahigh-resolution scanning laser fluorescence microscope (STED); and

Fig. 42 is a diagrammatic view of a STED in a seventh embodiment according to the present invention.

BEST MODE FOR CARRYING OUT THE INVENTION

Preferred embodiments of the present invention will be described with reference to the accompanying drawings.

First Embodiment

An optical control system 11 in a first embodiment according to the present invention receives an incident linearly polarized light wave containing a plurality of wavelength components, passes the linearly polarized light wave through an optical rotatory dispersion device to change the polarization plane rotation angles of the wavelength components, passes the linearly polarized light wave through an analyzer, and obtain a light wave containing wavelength components respectively having different spatial light intensity distributions by a spatial light modulator including a polarization plane rotator, such as a liquid crystal.

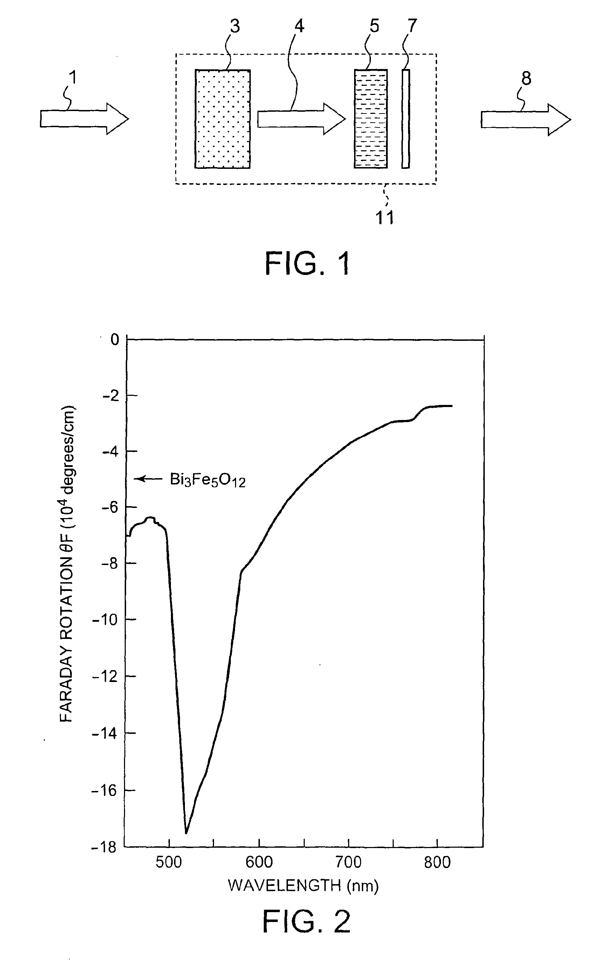

Referring to Fig. 1, the optical control system 11 includes a wavelength dispersion type optical rotatory device 3, an analyzer 7 and a spatial light modulator 5 capable of giving an optional polarization angle spatial distribution to the polarization plane of the incident light wave.

The analyzer 7 is an optical element that transmits a polarized component of a specific direction selectively. A representative example of the analyzer 7 is a polarizing plate, or a polarization beam splitter. The analyzer 7 gives a spatial light intensity distribution to an outgoing light wave on the basis of an polarization angle determined by the optical rotatory device 3.

The optical rotatory device 3 rotates the polarization plane of an incident light wave 1 through an polarization angle dependent on the wavelength of the incident light wave 1. Although the optical rotatory device 3 may be made of a natural optically rotatory material, such as quartz or a cholesteric liquid crystal, it is preferable that the optical rotatory device 3 is a Faraday rotator because the natural optically rotatory material has a large optical rotation angle and causes a large wavelength dispersion with optical rotation. When a magnetic field is applied to the Faraday rotator in a direction parallel to the optical axis of the Faraday rotator, the Faraday rotator exhibits a rotatory characteristic proportional to the strength of the magnetic field. The Faraday rotator is easy to adjust. When an optical rotatory device 3 is made of a magnetic material, the rotatory characteristic of the optical rotatory device 3 is proportional to magnetization instead of to the strength of a magnetic field. The present invention employs a bismuth-iron garnet crystal ($Bi_3Fe_5$ crystal) having a particularly high optical rotation angle deviation with wavelength.

Fig. 2 is a graph showing the chromatic dispersion coefficient of a bismuth-iron garnet crystal, in which wavelength is measured on the horizontal axis and polarization angle is measured on the vertical axis. The Faraday rotator using a bismuth-iron garnet crystal has a large wavelength dispersion coefficient and a large Faraday rotation coefficient. Therefore, the Faraday rotator has a short transmission distance, permits the use of a smaller element and hence can reduce light transmission loss. For example, when a light wave of a wavelength in the range of 700 to 800 nm is transmitted by a magnetically saturated bismuth-iron garnet crystal, the difference in the direction of polarization plane between the upper and the lower end is as large as about 18,000° per centimeter. Therefore, if the thickness of the bismuth-iron garnet crystal is 50 $\mu$m, the polarization angle dispersion is on the order of 90°.

The spatial light modulator 5 is divided into many cells. The cells of the spatial light modulator 5 individually give optional, rotation angles to the polarization plane of the linearly polarized light wave. A representative example of the spatial light modulator 5 is a TN liquid crystal device using the TN effect of a nematic liquid crystal.

Basically, the TN liquid crystal device is formed by sandwiching a nematic liquid crystal layer of a thickness on the order of 10 $\mu$m between paired transparent electrodes. An optical rotation angle to be given to the linearly polarized light wave transmitted by the TN liquid crystal device is adjusted through the adjustment of the voltage applied across the transparent electrodes.

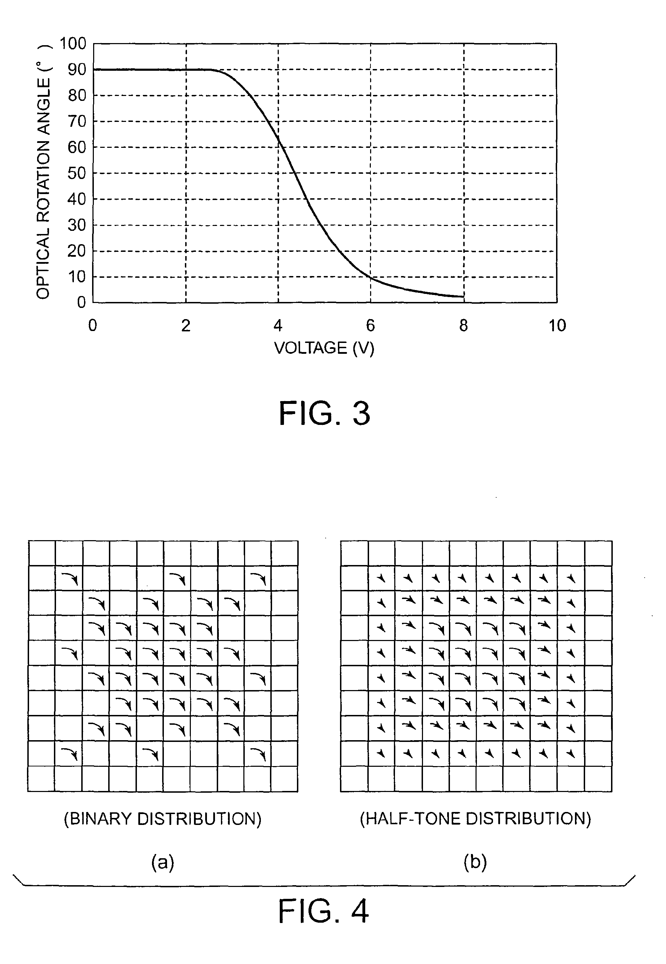

Fig. 3 is a graph showing the dependence of the optical rotation angle given to the incident linearly polarized light wave transmitted by the TN liquid crystal device on the voltage applied across the transparent electrodes. When the voltage is varied between 3 V and 8 V, the optical rotation angle varies between 0° and 90°. The cells arranged in lines and rows in a two-dimensional plane of the spatial light modulator 5 can determine different optical rotation angles individually for the transmitted light wave.

Thus an optional optical rotation angle pattern can be formed on a two-dimensional space on which the linearly polarized light wave falls.

Fig. 4 shows a typical example of a thus formed optical rotation angle pattern. Fig. 4(a) shows a binary distribution of optical rotation angles when some of the cells arranged in a two-dimensional space rotate the polarization plane of the transmitted light wave through an angle of 90° while others of the cells do not rotate the polarization plane of the transmitted light wave. Fig. 4(b) shows a half-tone distribution of optical rotation angles, in which optical rotation angles provided by the inner cells nearer to the center of the two-dimensional space are larger and optical rotation angles provided by the outer cells farther from the center of the two-dimensional space are smaller. Thus the pattern of optical rotation angles can be optionally adjusted by adjusting voltages applied to the cells.

The optical control system 11 shown in Fig. 1 passes an incident light wave 1, namely, a linearly polarized light wave containing a plurality of wavelength components, through the wavelength dispersion type optical rotatory device 3 to give different polarization plane angles to the wavelength components, respectively, and illuminates the spatial light modulator 5 with the light wave 1 passed through the optical rotatory device 3. Since the cells on the entrance surface of the spatial light modulator 5 are set for different polarization plane angles, respectively, the spatial light modulator 5 adds the polarization plane angles to the polarization plane angles of the wavelength components of the linearly polarized light wave 4. Polarized components of the polarized light wave emerging from the spatial light modulator 5 and parallel to the transmission polarization plane angle of the analyzer 7 pass through the analyzer 7 and emerge from the optical control system 11 as an outgoing light wave 8.

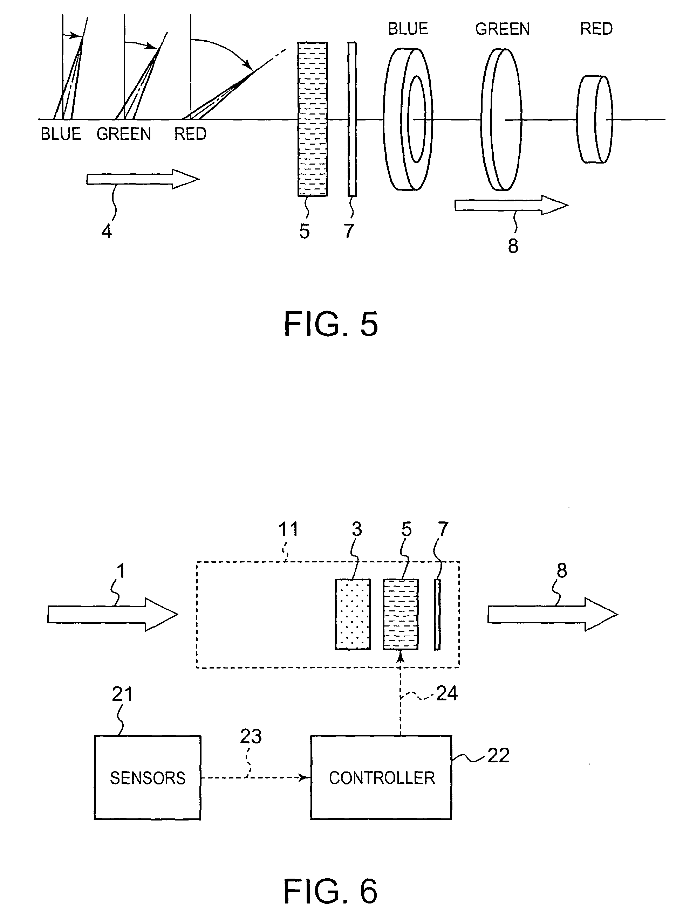

Suppose that the linearly polarized light wave 1 contains red, green and blue wavelength components, the optical rotatory device 3 gives different inclinations of polarization planes to the red, green and blue wavelength components. The red, green and blue wavelength components having polarization planes respectively having the different inclinations fall on the spatial light modulator 5. Then, the cells of the spatial light modulator 5 give different optical rotation angles respectively to the wavelength components. Therefore, when the cells are set for optical rotation angles corresponding to the polarization plane angles of the red, green and blue wavelength components, respectively, the red, green and blue wavelength components form different two-dimensional shapes, respectively, as shown in Fig 5.

Since the analyzer 7 passes wavelength components parallel to the transmission polarization plane angle, some wavelength components pass through the analyzer 7 unless the polarization planes of the wavelength components are perpendicular to the inclination of the polarization plane relevant to the spatial light modulator 5. In Fig. 5, the respective polarization angles of the red and the blue wavelength component are perpendicular to each other and hence the analyzer 7 is able to separate the red and the blue wavelength component completely. Since the polarization plane angle of the green wavelength component differs by 45° from the polarization plane angles of the red and the blue wavelength component, the green wavelength component cannot be completely separated from the red and the blue wavelength component.

The spatial light modulator 5 is divided into the plurality of cells and the cells rotate the polarization planes of the linearly polarized light wave individually through optionally different angles, respectively. Therefore, various spatial light intensity patterns can be formed for the plurality of wavelength components by adjusting voltages applied respectively across the pairs of transparent electrodes of the cells or by adjusting the wavelength dispersion angle of the wavelength dispersion type optical rotatory device 3.

Fig. 6 is a block diagram of assistance in explaining a method of controlling the spatial light intensities of wavelength components by the spatial light modulator 5 included in the optical control system 11.

Data signals 23 provided by sensors 21 and indicating a pressure, a temperature and light intensities of specific wavelength components are given to a controller 22. The controller 22 examines the data signals 23, generates a control signal 24 on the basis of the data signals 23 and gives the control signal 24 to a driver for driving the spatial light modulator 5. The spatial light modulator 5 adjusts optical rotation angles on the basis of the control signal 24.

The spatial light modulator 5 may be either a device having a single division having a uniform two-dimensional spatial distribution and a device having a plurality of divisions respectively having individually adjustable optical rotation angles. The outgoing light wave 8 emerging from the optical control system 11 has a spatially uniform light intensity and a spatially uniform color characteristic when the spatial light modulator 5 has a plurality of divisions or the outgoing light wave 8 emerging from the optical control system 11 has wavelength components respectively having different spatial light intensity distributions and different spatial color characteristic distributions when the spatial light modulator 5 has a plurality of divisions.

When the azimuth rotator 3 of the optical control system 11 gives different polarization angles to the wavelength components, the color characteristic of the outgoing light wave 8 and the light intensities of the wavelength components can be adjusted by changing the ratios of the polarization angle components for the wavelength components that pass through the analyzer 7 by the spatial light modulator 5. Therefore, the optical rotatory device 3 does not need to be a complicated device that require the adjustment of optical rotation angle and may be a device having a fixed strength of magnetization and a selectively determined, fixed thickness.

For example, when the incident light wave is a linearly polarized light wave containing red, green and blue wavelength components, the wavelength optical rotation angle dispersions, namely, the differences in optical rotation angle, of the red and the blue wavelength components can be adjusted to 90° and the wavelength dispersion of the green wavelength component can be adjusted to 45°. If optical rotation angles are set for the divisions of the spatial light modulator 5, respectively, so that the difference is 90°, the spatial light intensity distributions of the red and the blue wavelength components contained in the outgoing light wave have inverted patterns and the green wavelength component has a uniform spatial light intensity distribution.

The wavelength dispersion angle of the wavelength dispersion type optical rotatory device 3 and the polarization plane rotation angles of the divisions of the spatial light modulator 5 can be optionally set. Therefore, an optimum combination of spatial light intensity distributions for the wavelength components can be selectively determined, taking into consideration the power spectrum of the light wave incident on the optical control system 11 and the adjustment of the phases of the wavelength components when the optical control system 11 is applied to a practical use.

The optical control system 11 receives the incident light wave 1, i.e., the linearly polarized light wave containing the plurality of wavelength components, passes the incident light wave 1 through the azimuth rotator 3 having an optical rotatory dispersion characteristic for wavelength to change the polarization [plane rotation angles of the wavelength components, and passes the incident light wave 1 emerging from the optical rotatory device 3 through the spatial light modulator 5 including a polarization plane rotator, such as a liquid crystal, to provide the outgoing light wave 8 having wavelength components respectively having different spatial light intensity distributions.

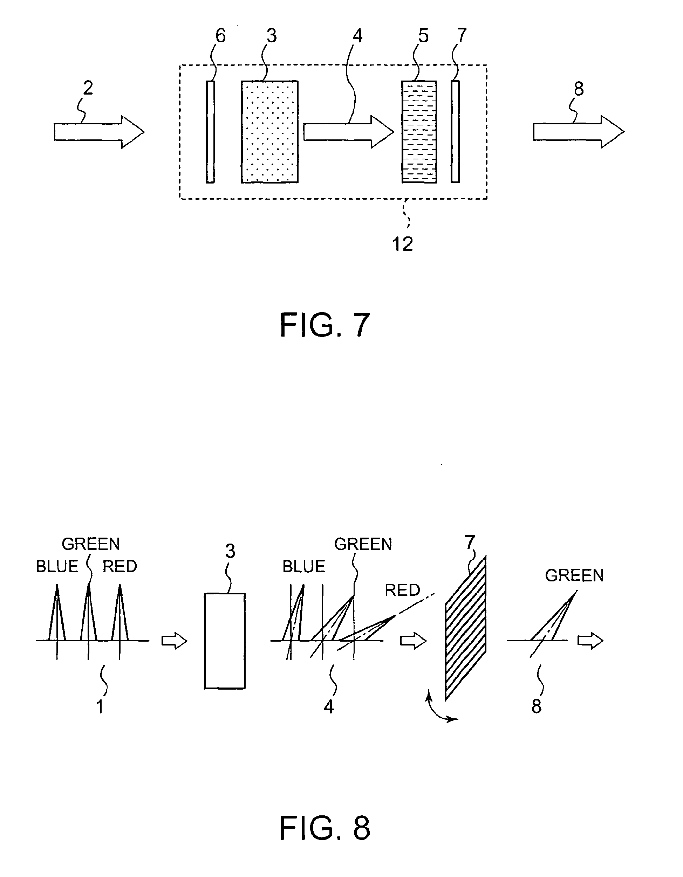

Fig. 7 is a block diagram of assistance in explaining a control method to be carried out by an optical control system 12 built by additionally providing the optical control system 11 with a polarizer 6. An optionally polarized incident light wave 2 is used instead of the linearly polarized light wave 1 emitted by a laser. The polarizer 6 transmits only a specific linearly polarized light wave component of the incident light wave 2. Therefore, an outgoing light wave 8 emerging from an analyzer 7 and having wavelength components respectively having different spatial light intensities can be provided by a mechanism shown in Fig. 8.

The optical control system 11 provided with the polarizer 6 has a greatly increased degree of freedom of selection of the incident light wave and can process any one of light waves emitted by an incandescent lamp, a fluorescent lamp, an electroluminescent light source and a light-emitting diode.

The light wave emitted by a light source may have any one of continuous spectra, like that of white light, and line spectra or may be a light wave containing red, green and blue wavelength components. The incident light wave may be any one of coherent light waves, incoherent light waves and partially coherent light waves.

The light wave produced by the optical control system in this embodiment has wavelength components respectively having different spatial patterns and different light intensity distributions which are easily and continuously controllable.

Accordingly, the optical control system in this embodiment can be applied to the illumination of advertising pillars, exhibition halls, stages, fountains, restaurants, shops, game machines, controllers of factories and power plants, and traffic facilities, such as automobiles, railways, ships and aircrafts, and can be used as light sources for displays.

The optical control system can be applied to uses for directly observing the outgoing light wave at the exit surface of the optical control system. The outgoing light wave emerging from the optical control system can be focused on a focal point of a focusing optical system by the focusing optical system to use the spatial and temporal energy distributions of the outgoing light wave.

A light wave containing wavelength components respectively having different spatial light intensity distributions appear on the exit surface of the optical control system and forms a near field pattern. The outgoing light wave emerging from the optical control system form an optical intensity distribution corresponding to the near field pattern, namely, a far field pattern, on a predetermined arrival plane due to the propagation and interference of light wave components emerging from the exit surface of the spatial light modulator 5 according to the Huygens-Fresnel principle. The far field pattern represents the action of light energy

Therefore, when the relation between the near field pattern and the far field pattern is determined and the optical components are adjusted so that a near field pattern corresponding to a desired far field pattern can be formed, a desired energy distribution can be formed at a point of application.

The relation between a near field pattern and a far field pattern can be determined through simulation.

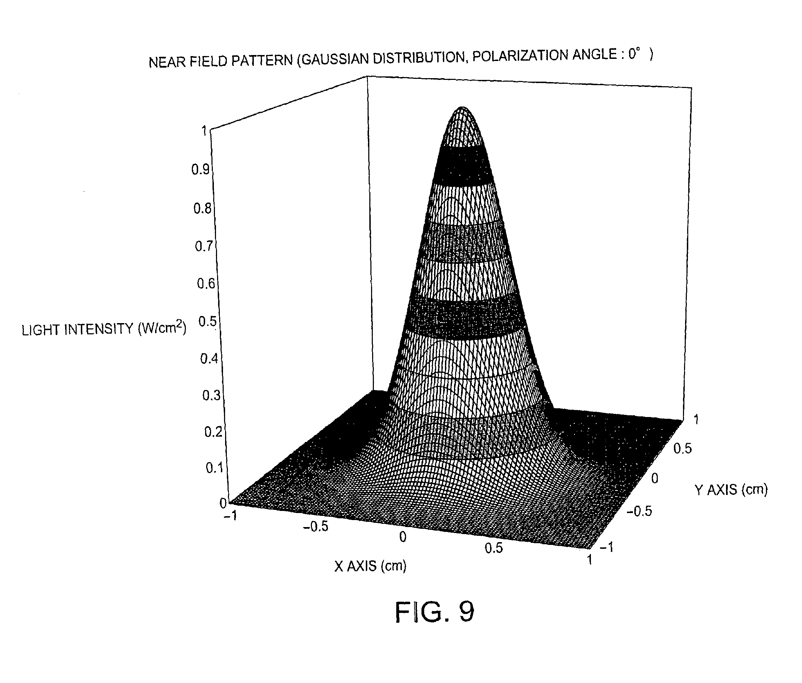

Figs. 9 to 18 are diagrams showing results of simulation of the relation between a near field pattern and a far field pattern when an polarization plane angle spatial distribution is controlled.

It was supposed for simulation that an incident light wave, namely, a linearly polarized light wave, is projected on a 2 cm-square area through a round opening of 2 cm in diameter and the area was divided into 100x100 divisions.

The polarization angle of the linearly polarized light wave with respect to a reference axis parallel to one side of an operation area is measured. The polarization angle is determined by the optical rotatory dispersions of the wavelength components caused by an azimuth rotator.

Suppose that a Gaussian distribution function is expressed by: $A = \exp^{-\frac{r^2}{B^2}}$

where A is the amplitude of the light wave, r is distance from the optical axis $\left( = \left( x^2 + y^2 \right)^{1/2} \right)$, and B $(= 0.5)$ is a shape parameter.

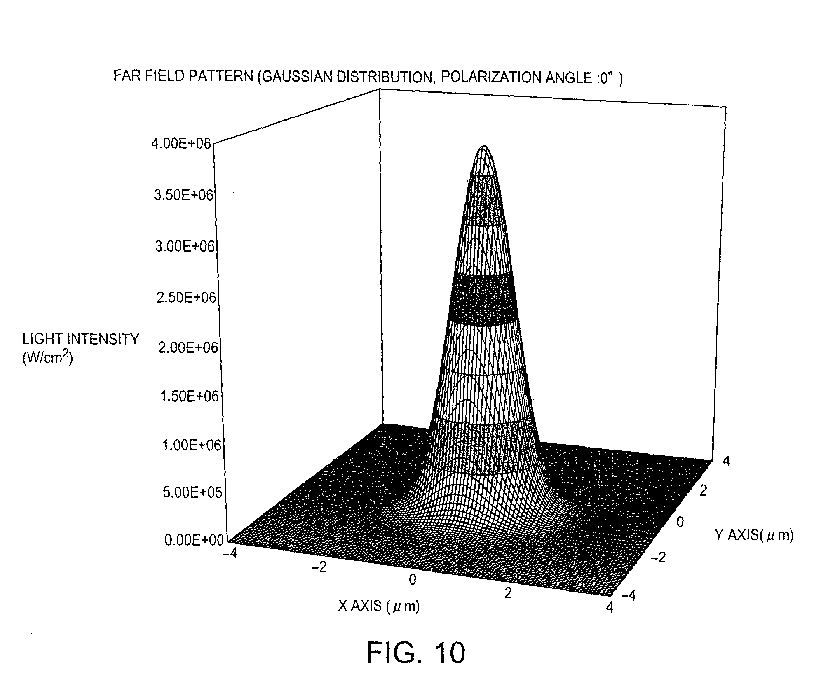

Suppose that a near field pattern is represented by a three-dimensional Gaussian distribution shown in Fig. 9 when the polarization angle is 0°. Then, a far field pattern represented by a Gaussian distribution having a narrow half width as shown in Fig. 10 can be formed.

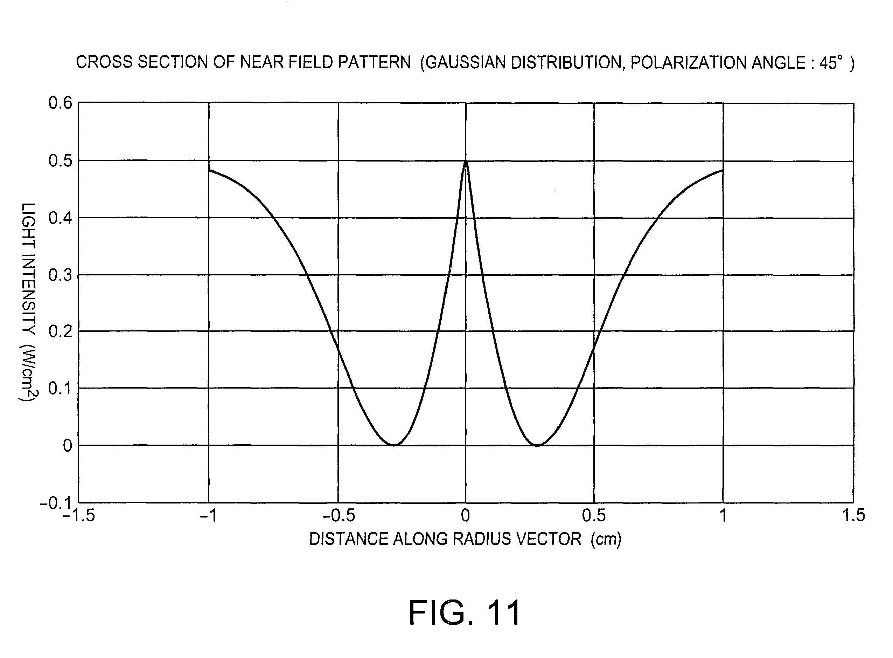

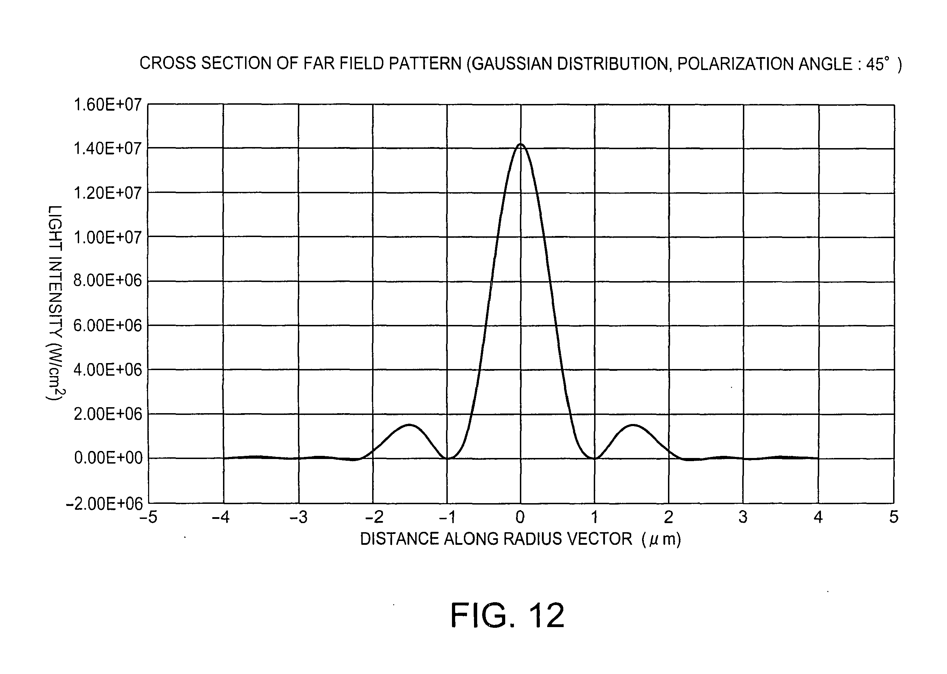

When a linearly polarized light wave having an polarization angle of 45° forms a near field pattern of a three-dimensional Gaussian distribution having a section in a plane containing the optical axis as shown in Fig. 11, a far field pattern having a three-dimensional Gaussian distribution having a section in a plane containing the optical axis as shown in Fig. 12. The section shown in Fig. 12 has a high light intensity peak on the optical axis and low light intensity peaks on the opposite sides of the optical axis.

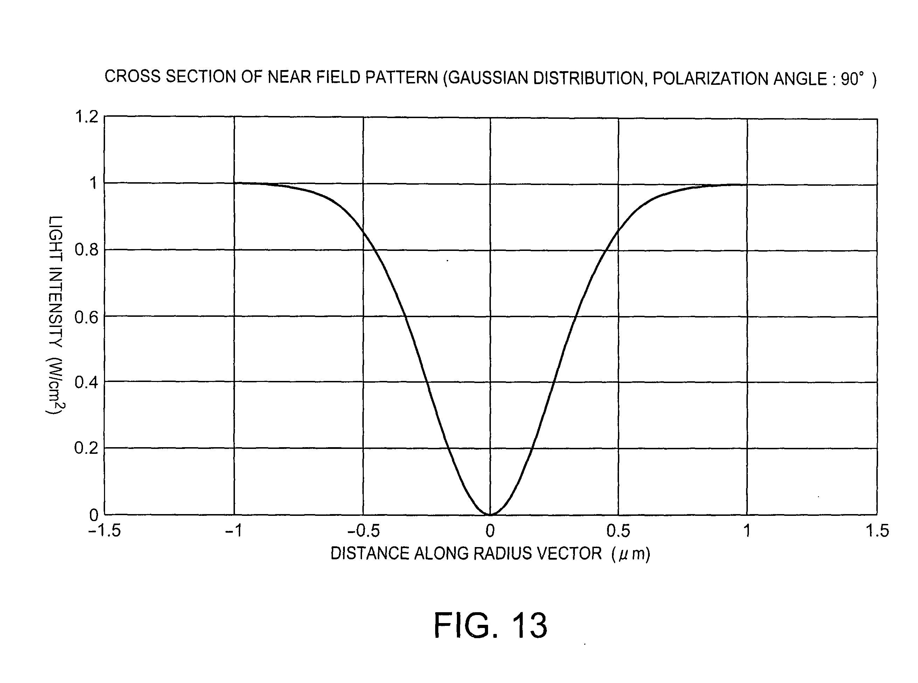

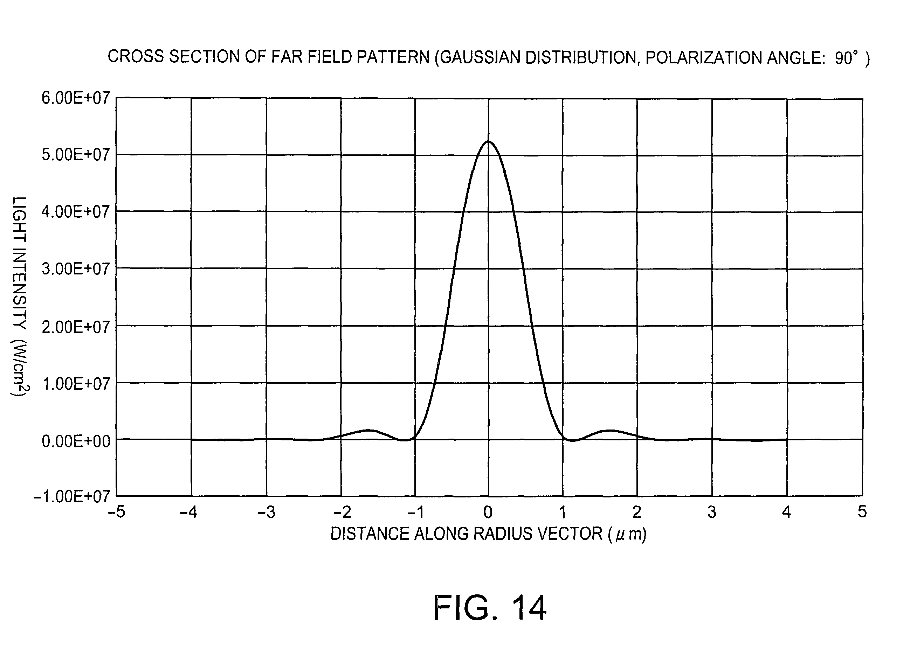

When a linearly polarized light wave having an polarization angle of 90° forms a near field pattern of a three-dimensional Gaussian distribution having a section in a plane containing the optical axis and having a light intensity of zero on the optical axis as shown in Fig. 13, a far field pattern having a light intensity distribution having a peak on the optical axis as shown in Fig. 14 is formed.

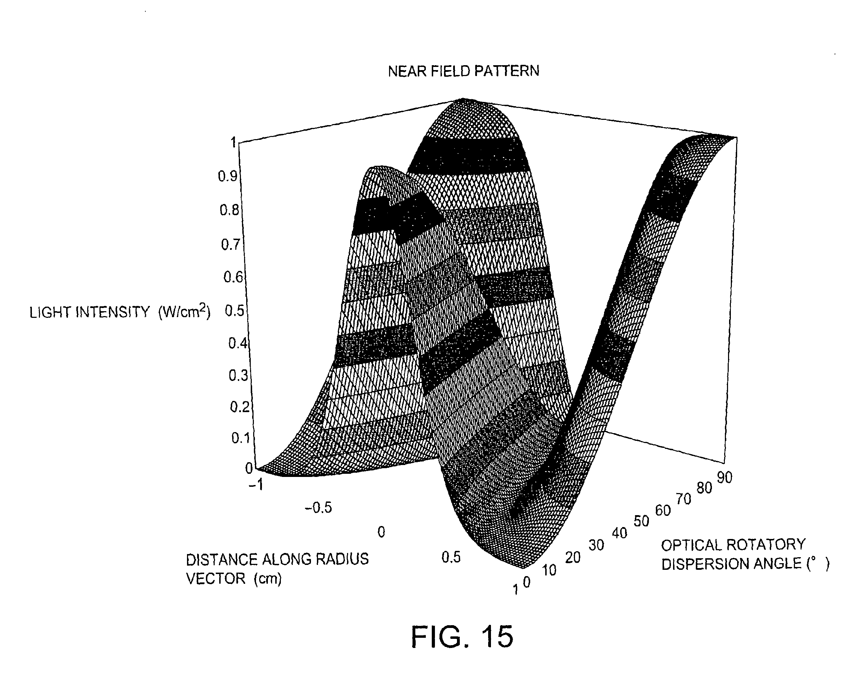

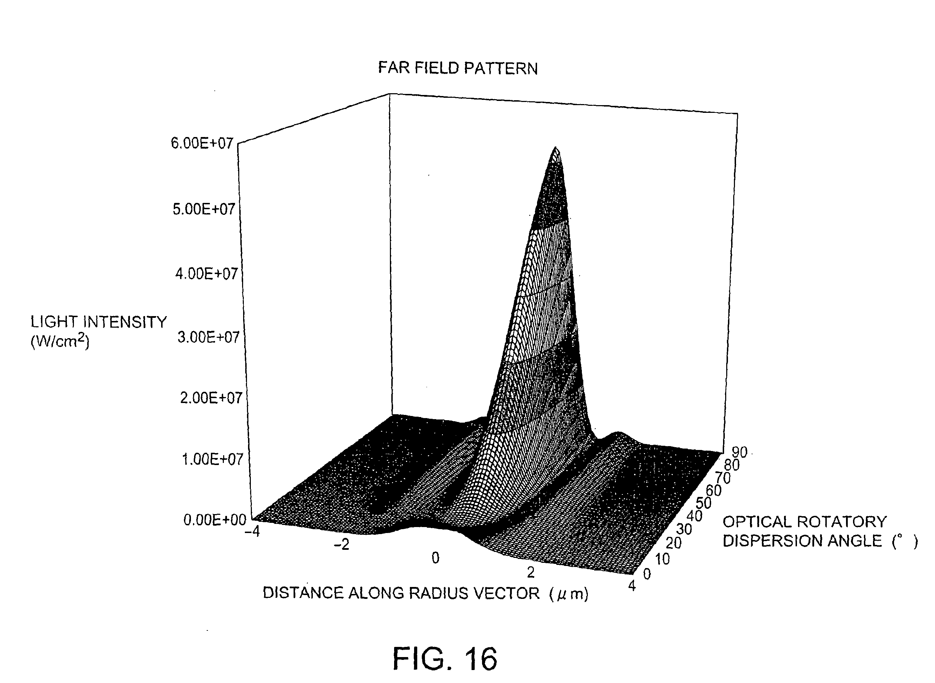

Fig. 15 is a three-dimensional picture obtained by continuously plotting the profile of the section of the near field pattern shown above with respect to polarization angle. It was found that the sharpness of a peak on the optical axis of a far field pattern corresponding to those near field patterns increases as polarization angle increases as shown in Fig. 16.

Since the optical rotatory dispersion device changes polarization angle according to wavelength, the formation of a near field pattern that changes according to polarization angle signifies changing a near field pattern according to wavelength. Thus a far field pattern formed on the basis of a near field pattern that changes according to polarization angle changes according to wavelength.

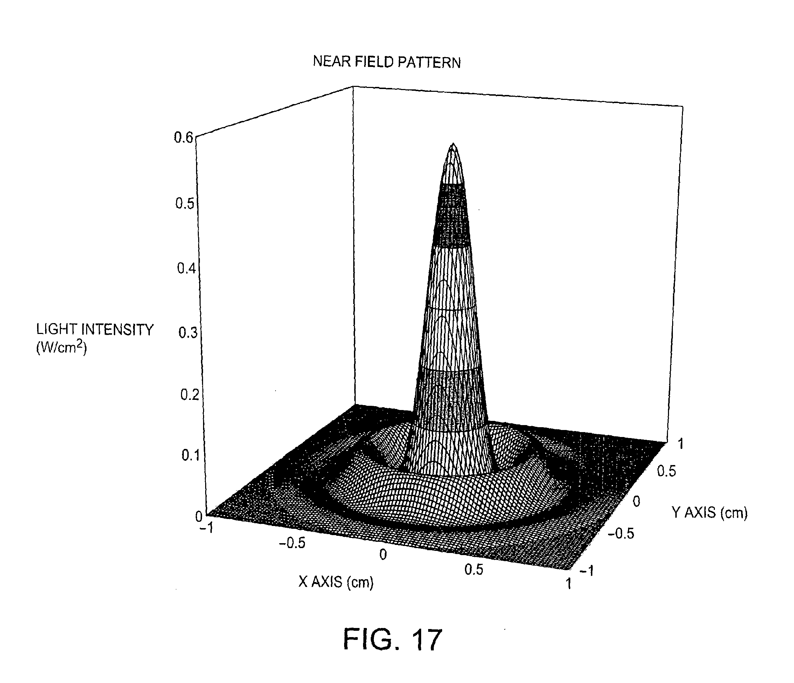

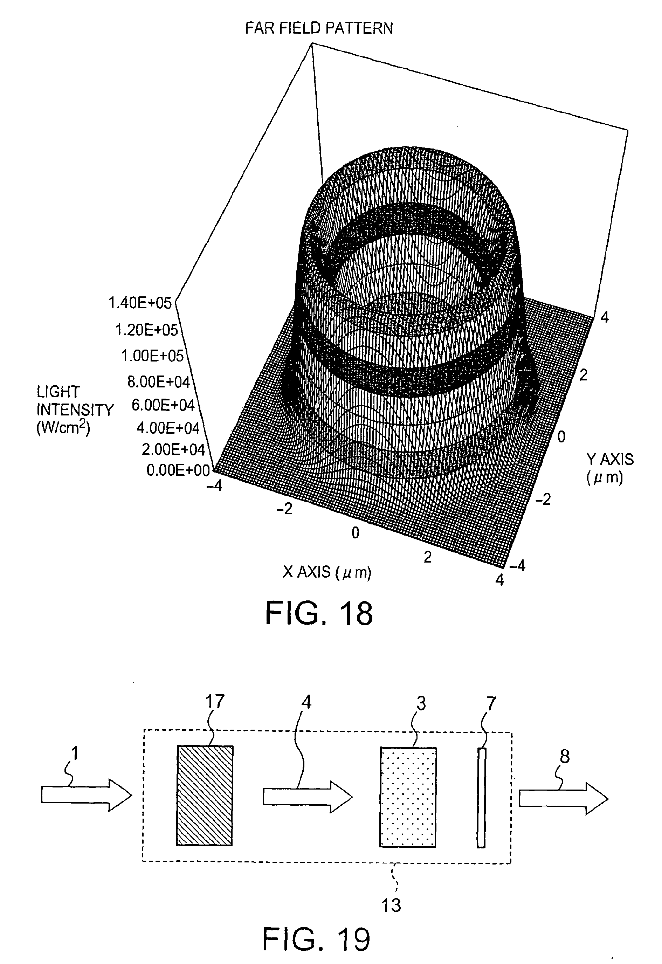

Figs. 17 and 18 show a near field pattern and a far field pattern, respectively. The spatial modulation of the near field pattern shown in Fig. 17 has a distribution expressed by a primary Bessel function. The far field pattern corresponding to the near field pattern has an annular shape.

Light intensity I in a Bessel function distribution is expressed by;

$$ I = I_0 \left( 2J_1(r)/r - \varepsilon^2 \times 2J_1(\varepsilon r)/\varepsilon r \right)^2 $$

where r is distance from the optical axis, $\varepsilon$ is parameter of the radius of a shading plate meeting an inequality: $0 < \varepsilon < 1$ and $J_1$ is primary Bessel function.

When the near field pattern shown in Fig. 17 is formed, the far field pattern has the shape of a doughnut as shown in Fig. 18.

When the relation between the near field pattern and the far field pattern is known previously, a desired far field pattern can be formed by forming a proper near field pattern, i.e., a spatial light intensity distribution, on the exit surface of the optical control system. A desired optical reaction can be caused by irradiating an object with light energy having a predetermined spatial light intensity distribution.

Second Embodiment

An optical control system 13 in a second embodiment according to the present invention is provided with a wavelength phase modulator 17 in addition to components corresponding to those of the optical control system 11. The optical control system 13 adjusts, in addition to spatial light intensity distributions of wavelength components, the temporal waveform or phases of wavelength components of an incident light wave to emit a desired outgoing light wave.

Referring to Fig. 19 schematically showing the optical control system 13 in the second embodiment, the optical control system 13 adjusts the phases of the wavelength components of an incident linearly polarized light wave 1 so as to meet a predetermined relation by the wavelength phase modulator 17, changes the polarization plane rotation angles of the wavelength components by an azimuth rotator 3 having an optical rotatory dispersion characteristic, and then passes the incident linearly polarized light wave 1 processed by the wavelength phase modulator 17 and the azimuth rotator 3 through an analyzer 7 to emit an outgoing light wave 8 having wavelength components respectively having different spatial light intensities and different phases.

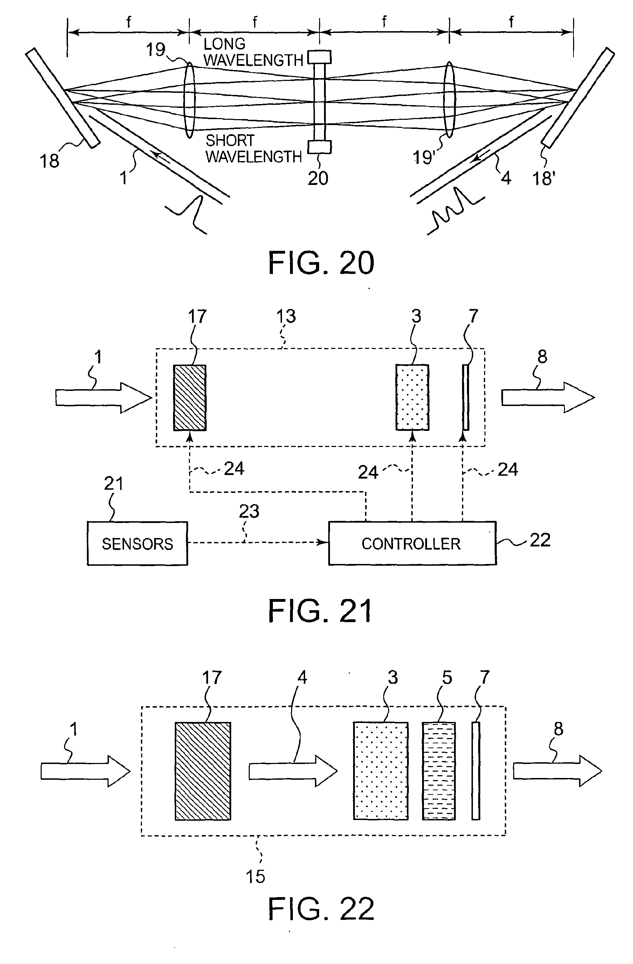

The wavelength phase modulator 17 is, for example, a pulse shaping optical system called a Fourier light synthesis system. Fig. 20 is a diagrammatic view of the Fourier light synthesis system.

The Fourier light synthesis system includes an entrance diffraction grating 18, an entrance focusing optical system 19, a spatial light modulator 20 capable of spatial modulation, an exit focusing optical system 19' and an exit diffraction grating 18'. The Fourier light synthesis system is an ultrashort light pulse Fourier shaping system formed by arranging two sets each of a diffraction grating and a lens on the opposite sides of the spatial light modulator 20, respectively, at intervals corresponding to focal distance in a 4-f arrangement.

The spatial light modulator 20 uses, for example, an array type liquid crystal light modulator, for controlling the optical path length of transmitted light. The spatial light modulator 20 is capable of individually adjusting the respective optical path lengths of optical components of incident light separated in a direction perpendicular to the optical axis; that is, the spatial light modulator 20 is capable of adjusting the phases of the wavelength components of an incident light wave to predetermined phases by changing the respective optical path lengths of the wavelength components separated by spectral resolution.

An incident light wave 1 having a plurality of wavelength components, such as an ultrashort light pulse, is subjected to angular dispersion by the entrance diffraction grating 18 and is transferred to a Fourier transform plane by the focusing optical system 19 disposed in a Fourier transform arrangement. The wavelength components are arranged linearly in parallel beams in a direction perpendicular to the optical axis on the Fourier transform plane by spectral development. The respective phases of the wavelength components are delayed or the respective amplitudes of the wavelength components are reduced by a spatial light modulator 5 placed on the Fourier transform plane. The light wave 1 passed through the spatial light modulator 5 is subjected to optical inverse Fourier transform. Consequently, a light pulse 4 emerging from the exit diffraction grating 18' has wavelength components respectively having individually adjusted phases. Thus the light pulse 4 is equivalent to a light wave produced by temporal phase modulation.

The light wave is passed through an optical rotatory device 3 and an analyzer 7 to adjust the spatial light intensity thereof. An outgoing light wave 8 processed by temporal phase and amplitude adjustment emerges from the optical control system 13.

The Fourier light synthesis optical system is capable of effectively adjusting the phases of the individual wavelength components of an ultrashort pulse of femtoseconds. The aforementioned AOPD, as compared with the Fourier light synthesis optical system, is effective in dealing with a slower phenomenon. Although the optical control system 13 has been described on an assumption that the light wave has red, green and blue wavelength components for simplicity, naturally, the optical control system 13 is capable of separating the wavelength components of a light wave having a continuous spectrum and modulating the phases of the wavelength components.

Fig. 21 is a block diagram of assistance in explaining operations of the optical control system 13 in the second embodiment for individually controlling the respective spatial light intensities of the wavelength components. The optical control system 13 can be applied to various types of illumination, display and process control. Data signals 23 provided by sensors 21 and indicating a pressure, a temperature and light intensities of specific wavelength components are given to a controller 22. The controller 22 examines the data signals 23, generates a control signal 24 on the basis of the data signals 23 and gives the control signal 24 to the wavelength phase modulator 17 and the azimuth rotator 3. Then, the wavelength phase modulator 17 adjusts the respective phases of the wavelength components and the optical rotatory device 3 changes the optical rotation angle.

Needless to say, the optical rotation angle may be adjusted by the analyzer instead of or in addition to the optical rotation angle adjustment by the optical rotatory device 3.

Fig. 22 is a block diagram of an optical control system 15 in a modification of the optical control system 13 in the second embodiment. The optical control system 15 is provided, in addition to the components of the optical control system 13, a spatial light modulator 5 capable of giving an optional spatial optical rotation angle distribution to the polarization plane of the incident light wave. The spatial light modulator 5 is interposed between the wavelength dispersion type azimuth rotator 3 and the analyzer 7.

The optical control system 15 shown in Fig. 22 passes an incident linearly polarized light wave 1 having a plurality of wavelength components through the wavelength phase modulator 17 to adjust the respective phases of the wavelength components, gives different polarization plane rotation angles to the wavelength components by the wavelength dispersion type optical rotatory device 3, adjusts the spatial distribution of the polarization plane rotation angle of the incident light wave by the spatial light modulator 5 to select a light wave to be passed through the analyzer 7.

Thus the wavelength components of the outgoing light wave 8 are determined selectively and the respective light intensities of the wavelength components are adjusted to control the color characteristic and light intensity of the outgoing light wave 8 properly. Thus the temporal relative positions of the wavelength components can be changed. The optical control system 15 has a wide variety of uses particularly in a field where light energy is used.

The optical control systems 13 and 15, similarly to the optical control system 11 in the first embodiment, can use a linearly polarized component of an optional polarized light wave having optional wavelength components other than linearly polarized light waves by extracting the linearly polarized component from the incident polarized light wave by a polarizer disposed at a position of incidence to use the linearly polarized light wave.

In the optical control systems 13 and 15, the spatial light modulator 5 changes the wavelength spatial light intensities, and the wavelength phase modulator 17 has the ability of wavelength phase modulation. Thus, temporal waveform can be adjusted simultaneously with the precise adjustment of the spatial light intensity distributions of the wavelength components. Thus the optical control systems 13 and 15 having simple construction including the several optical components can easily achieve the precise temporal and spatial control of light. The ability to achieve the precise temporal and spatial control of light of the optical control system of the present invention is very useful in process control using light.

Third Embodiment

An optical control system 51 in a third embodiment according to the present invention forms a desired far field pattern by adjusting a near field phase distribution by using a spatial light modulator capable of controlling spatial optical phase to achieve laser process control.

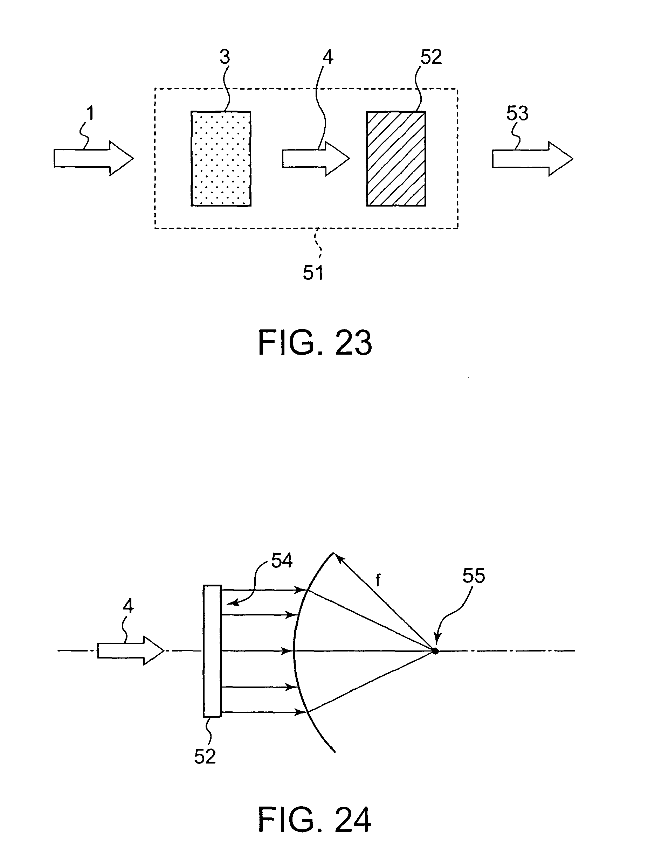

Referring to Fig. 23 showing the optical control system 51, the optical control system 51 has a wavelength dispersion type optical rotatory device 3 capable of changing optical rotation angle according to wavelength and a spatial optical phase modulator 52. An incident light wave 1 passes through the optical rotatory device 3 and the spatial optical phase modulator 52 in that order.

The spatial optical phase modulator 52 produces an outgoing light wave 53 differing in the ratio between a polarized component to be subjected to spatial optical phase modulation and a polarized component not to be subjected to spatial optical phase modulation from a light wave having a different polarization plane angle by individually and spatially changing only one of polarized components, parallel to one of two perpendicularly intersecting coordinate axes defining a plane perpendicular to an optical axis. For example, the spatial optical phase modulator 52 is a two-dimensional optical phase modulator using the anisotropic refraction index of a nematic liquid crystal. The nematic liquid crystal has elongate molecules and has an refractive index anisotropy having an extraordinary ray axis subject to phase delay in a direction parallel to the major axes of the molecules and an ordinary ray axis not subject to phase delay in a direction perpendicular to the direction parallel to the major axes of the molecules.

The two-dimensional optical phase modulator is a nematic liquid crystal device in which molecules of a nematic liquid crystal are arranged along the optical axis with the axes thereof extended parallel to a direction perpendicular to the optical axis. The liquid crystal molecules of the liquid crystal device are oriented in a direction defined by an orientation film while any electric field is not applied thereto.

When a voltage is applied across transparent electrodes sandwiching a liquid crystal layer, the axes of the liquid crystal molecules are inclined to the optical axis according to the applied voltage to change the phase of a polarized light wave polarized in the direction of the axes of the molecules. The phase of a polarized light wave polarized in a direction perpendicular to the axes of the liquid crystal molecules does not change even if the position of the axes of the liquid crystal molecules changes.

The ratio between a first polarized component parallel to the major axes of the liquid crystal molecules and a second polarized component perpendicular to the major axes of the liquid crystal molecules of the incident linearly polarized light wave is dependent on the direction of polarization. Therefore, phase delay is dependent on the angle of the polarization plane of the incident polarized light wave. Phase delay is dependent on the voltage applied across the transparent electrodes.

Proper voltages are applied to two-dimensional positions on the spatial optical phase modulator to form a predetermined phase delay pattern, and a linearly polarized light wave having a plurality of wavelength components is passed through the azimuth rotator. Then, different polarization plane optical rotation angles are given to the wavelength components of the incident linearly polarized light wave, respectively. Then, the linearly polarized light wave falls on the spatial optical phase modulator on which the two-dimensional phase delay pattern is formed. Different phase differences are given to the light wave emerging from the spatial optical phase modulator according to voltages set respectively for positions on the entrance surface and according to the polarization plane rotation angles given to the wavelength components.

When the optical control system 51 in the third embodiment receives a linearly polarized light wave 1, the optical rotatory device 3 gives optical rotation angles respectively to the wavelength components and a light wave 4 emerges from the optical rotatory device 3. The light wave 4 falls on the spatial optical phase modulator 52 having entrance surface having parts adjusted respectively to different phase change quantities. Since the wavelength components have polarization planes of different inclinations, respectively, only one of polarized components, parallel to one of two perpendicularly intersecting coordinate axes can be individually and spatially changed. Thus the spatial optical phase modulator 52 produces the outgoing light wave 53 having light wave components respectively having different polarization plane angles and different ratios between a polarized component to be subjected to spatial optical phase modulation and a polarized component not to be subjected to spatial optical phase modulation.

A near field phase distribution having different ratios between a polarized component subjected to spatial optical phase modulation and a polarized component not subjected to spatial optical phase modulation is formed on the exit surface of the spatial optical phase modulator 52. A light intensity distribution corresponding to the near field phase distribution, namely, a far field pattern, is formed on the focal plane of a focusing optical system by focusing the outgoing light wave emerging from the spatial optical phase modulator 52 by the focusing optical system. The far field pattern shows the action of light energy on the focal plane.

Fig. 24 is a diagrammatic view of assistance in explaining the principle of forming the far field pattern from the near field pattern by the focusing optical system.

An initial outgoing light condition can be indicated by projecting a near field light intensity distribution and a near field phase distribution in the direction of the optical axis on a spherical surface of a radius f equal to the focal distance f of the focusing optical system. Light projected on the spherical surface propagate according to the Huygens-Fresnel principle and is focused on a space near the focal point to form a far field pattern.

The near field pattern and the far field pattern are correlated by Fourier transform and Fourier inverse transform. A light intensity pattern can be formed at a position corresponding to the focal point by exactly determining the relation between the near field pattern and the far field pattern on the basis of test results and simulation and forming a near field light intensity distribution corresponding to a desired far field pattern.

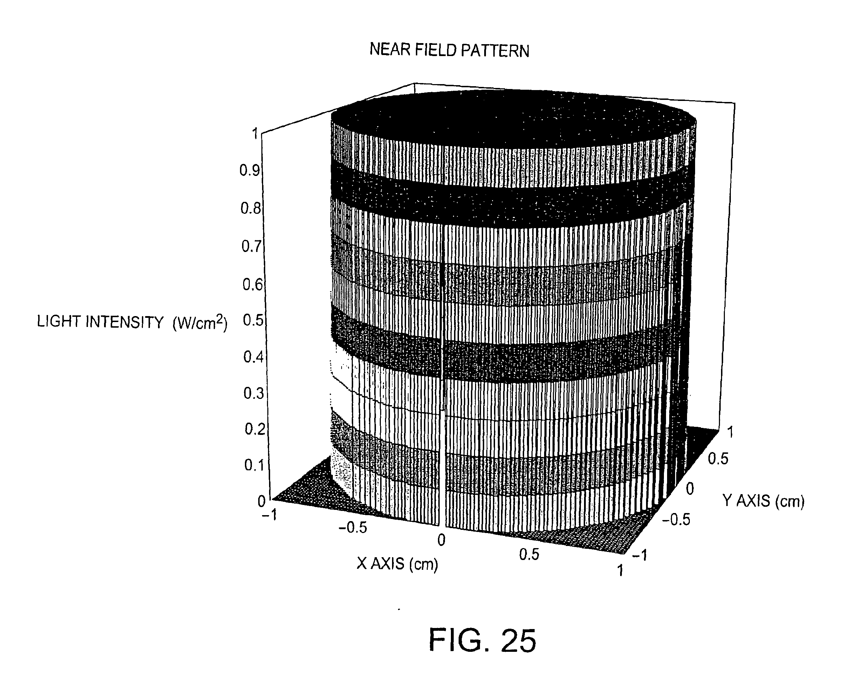

Figs. 25 to 34 are diagrams formed through simulation to determine the relation of the near field pattern and the near field phase distribution with the far field pattern by simulation.

The simulation was conducted on an assumption that a spatial light intensity distribution having a central hole for a far field pattern is needed and used a phase rotation beam processed by phase rotation by the spatial optical phase modulator so that the phase changes by $2\pi$ or by an integral multiple of $2\pi$ when the near field pattern is turned one full turn about the optical axis.

Fig. 25 is a three-dimensional diagram showing the optical intensity distribution of a near field pattern when the incident light wave to the optical control system 51 is a plane wave. The incident light wave has a circular distribution of 2 cm in diameter and has a light intensity of 1 W/cm$^2$.

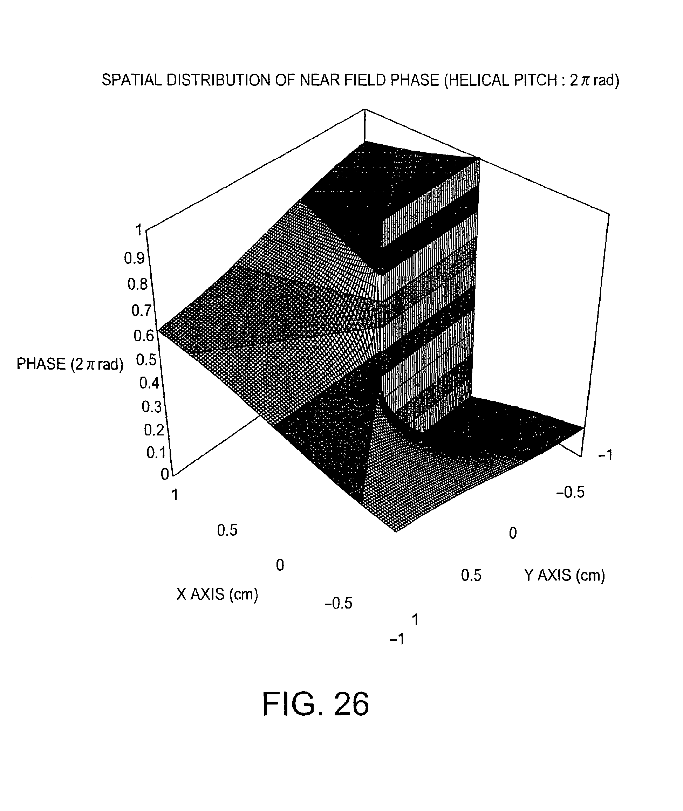

Fig. 26 is a three-dimensional diagram of assistance in explaining phase rotation exerted on the incident light wave. A phase rotation of $2\pi$ is exerted on the incident light wave about the optical axis.

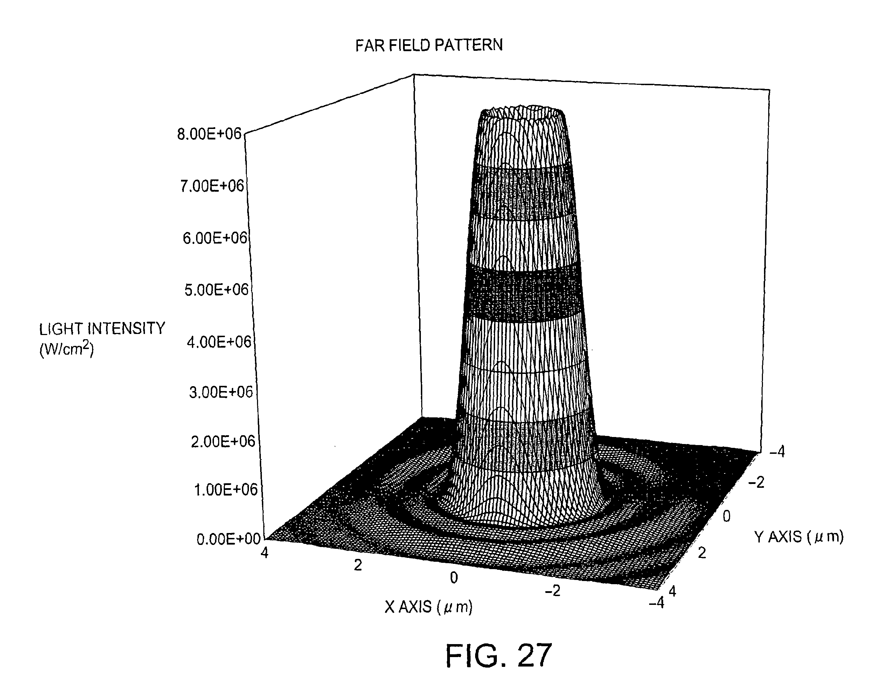

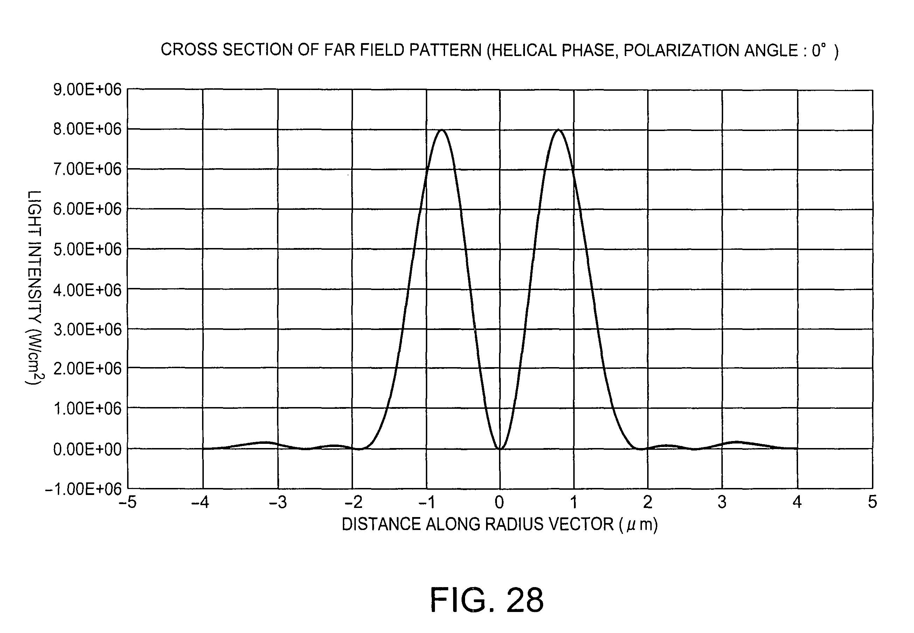

Fig. 27 is a three-dimensional diagram of the light intensity distribution of a far field pattern corresponding to the near field pattern shown in Fig. 25. Fig. 28 is a sectional view of a section of the far field pattern shown in Fig. 27 in a plane including the axis of the far field pattern shown in Fig. 27. The far field pattern has a doughnut shape having a central part on the optical axis having a low light intensity and a peripheral part at a distance from the optical axis and surrounding the optical axis and having a high light intensity.

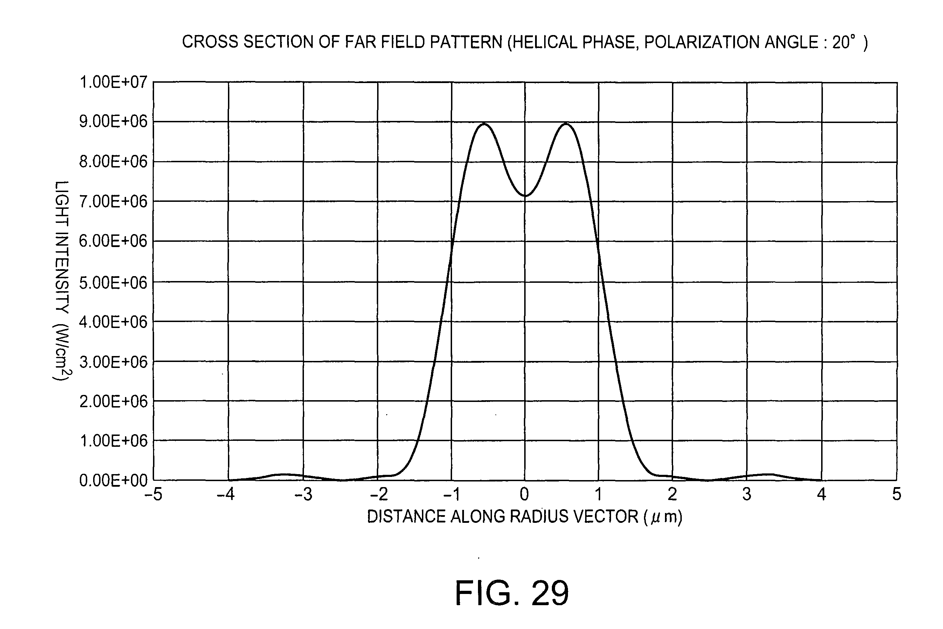

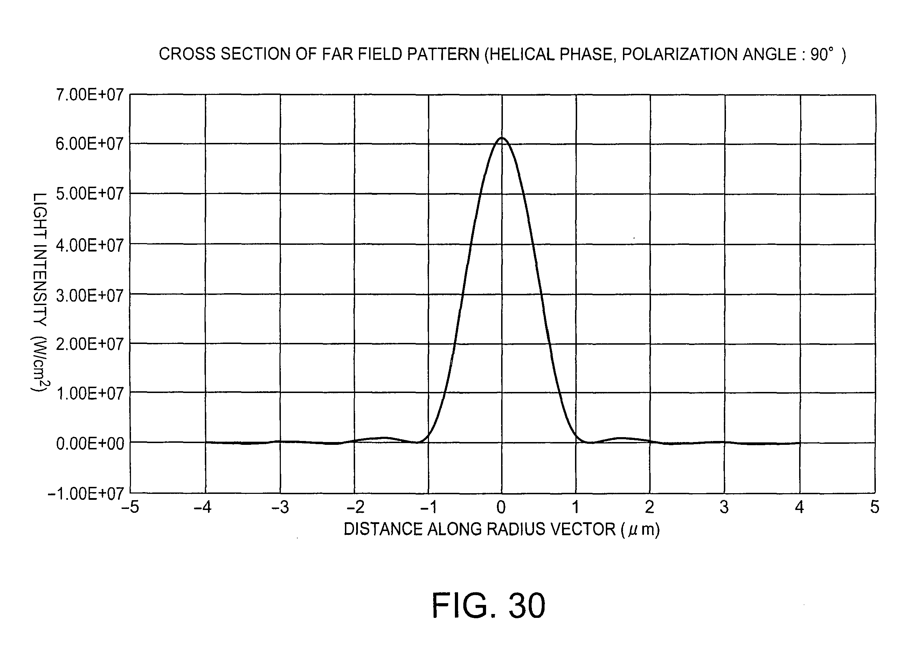

Fig. 29 is a sectional view of a far field pattern when the polarization angle of an incident light wave is 20°. A reduction of the light intensity of a central part on the optical axis is small because the polarization angle is small. Fig. 30 is a sectional view of a far field pattern when the polarization angle of an incident light wave is 90°. A considerably sharp peak appears in a central part on the optical axis.

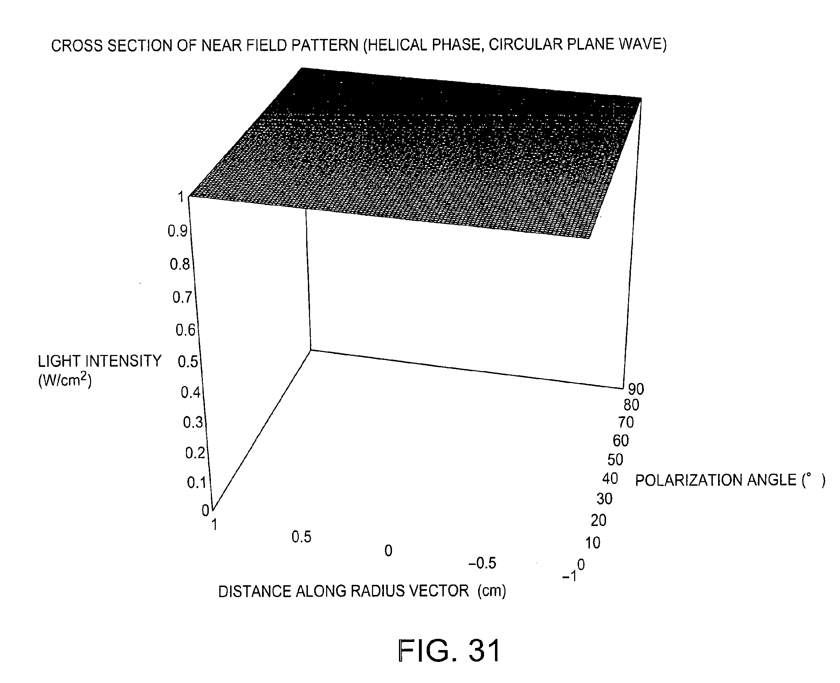

Fig. 31 is a three-dimensional diagram of a section of a light intensity distribution with respect to the axis of symmetry of a near field pattern for polarization angle as a parameter. The light intensity of the near field pattern is influenced by neither distance in the direction of radius vector nor polarization angle.

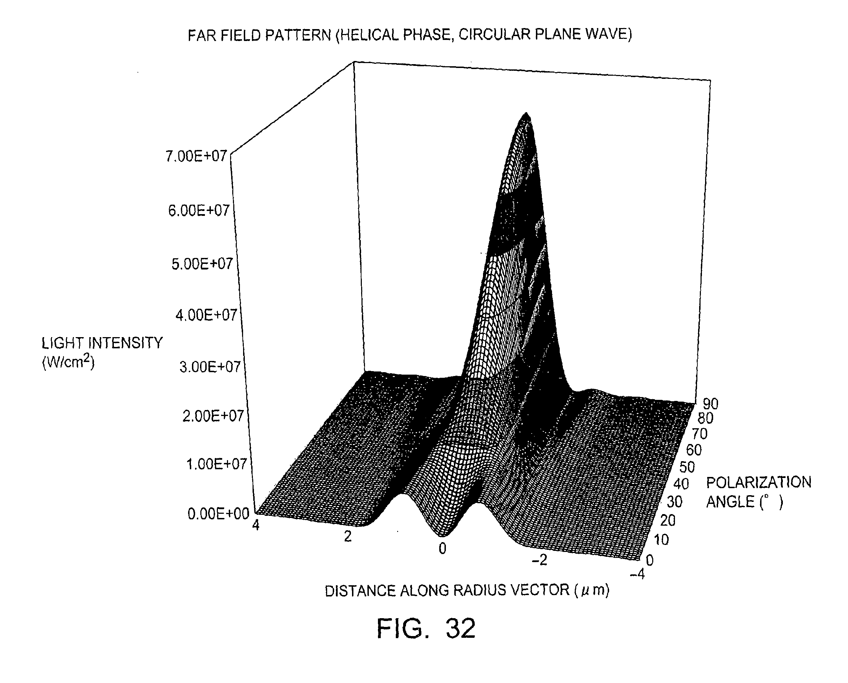

Fig. 32 is a three-dimensional diagram of the light intensity distribution of a far field pattern corresponding to the near field pattern shown in Fig. 31 for polarization angle as a parameter. The light intensity distribution has a low central part on the optical axis for small polarization angles when the light intensity is the same, has a peak on the optical axis for a large polarization angle and the sharpness of the peak increases as the polarization angle increases.

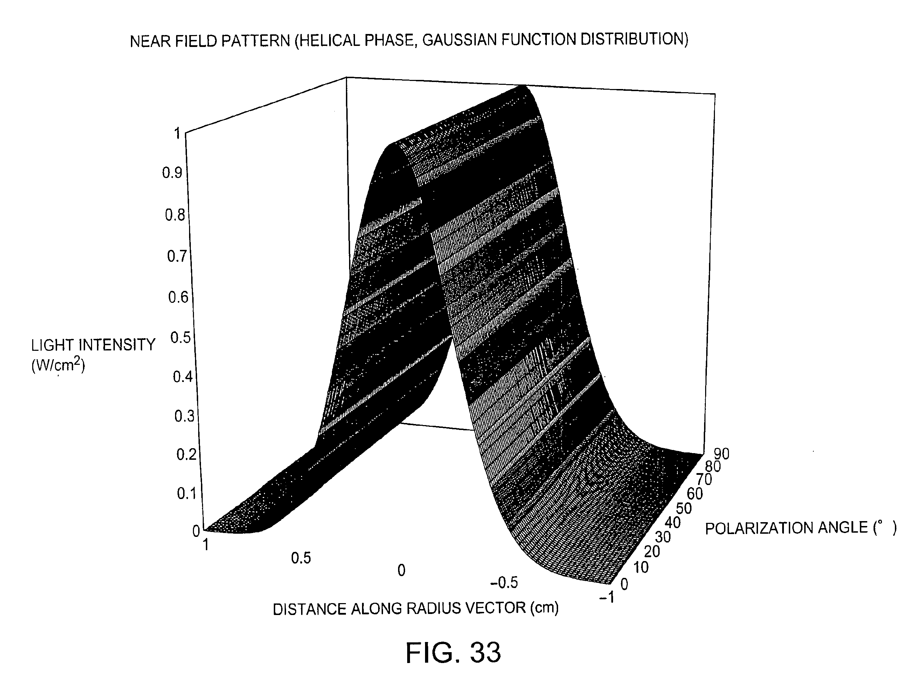

Fig. 33 is a three-dimensional diagram of a near field pattern of a Gaussian function distribution type for the polarization angle of an incident light wave in the so-called phase rotation beam.

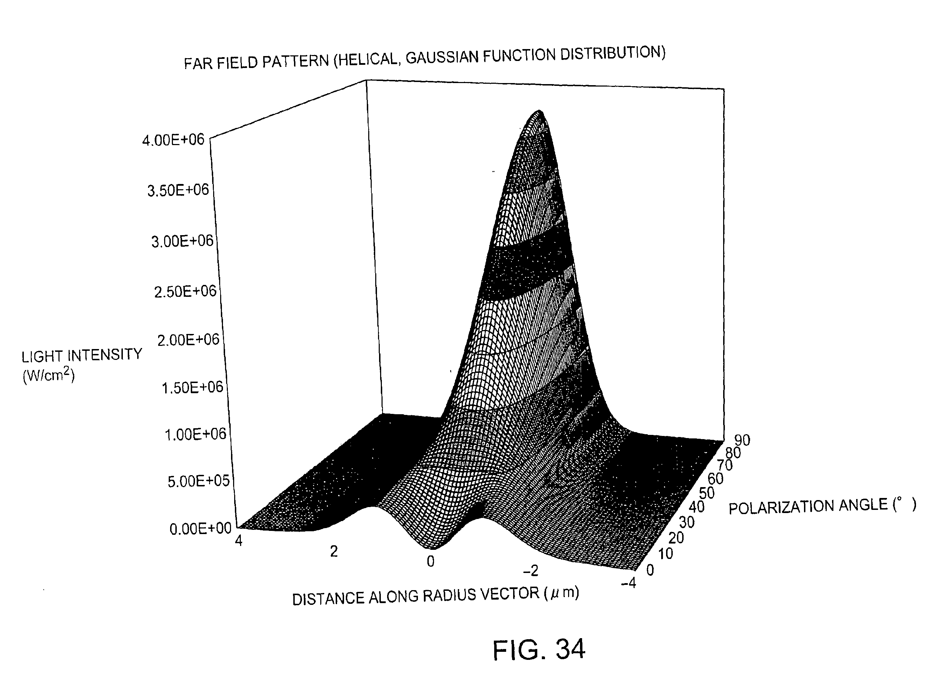

Fig. 34 is a three-dimensional diagram of a far field pattern formed by focusing the near field pattern shown in Fig. 33 by a focusing optical system on the focal point of the focusing optical system. The variation of the light intensity distribution of the far field pattern bears a close resemblance to that of a light wave having a uniform intensity distribution. A near field pattern of a Gaussian function distribution type, as compared with a light wave having a uniform intensity distribution, has a low wall and a low peak light intensity.

Since different light intensity patterns can be formed for different polarization angles, various light energy patterns can be formed by using a linearly polarized light wave having a plurality of wavelength components as an incident light wave to increase the degree of freedom of optical output control, such as laser process control.

The spatial light intensity distribution of a far field pattern can be controlled with out passing the outgoing light wave through the analyzer when the spatial optical phase modulator is used. Consequently, light energy can be efficiently used without attenuating the light wave.

Since the polarization plane of an incident light wave incident on the optical rotary device can be selected by placing a polarizer above the optical rotary device or with respect to the direction of travel of the incident light wave, the same effect can be expected even if a light wave other than the linearly polarized light wave is used.

A control mechanism, not shown, for controlling the spatial optical phase modulator and the azimuth rotator, similarly to the optical control system in the first embodiment, receives data signals representing external conditions and provided by various sensors, sends proper control signals produced on the basis of the data signals to the spatial optical phase modulator or the azimuth rotator to provide a desired outgoing light wave.

Thermal reactions, such as melting and evaporation, nuclear reactions, plasma reactions, chemical reactions and processes, such as isotope separation and fluorescent luminance, can be achieved by irradiating matters with laser pulses produced by the optical control system of the present invention and having a plurality of wavelength components and controlled temporal and spatial light pulse construction. Those processes can be applied to laser machining, synthesis, decomposition and separation of chemical substances and elements, production of particles, such as atoms, molecules, ions, electrons, positive electrons, neutrons and clusters, production electromagnetic radiations, such as x-rays and $\gamma$-rays, and production and control of fluorescent light.

Those techniques are expected to be applied to the industrial fields of semiconductors, chemistry, energy, medicine and machinery, and basic studies of particle accelerators and inspection of biological substances.

Fourth Embodiment

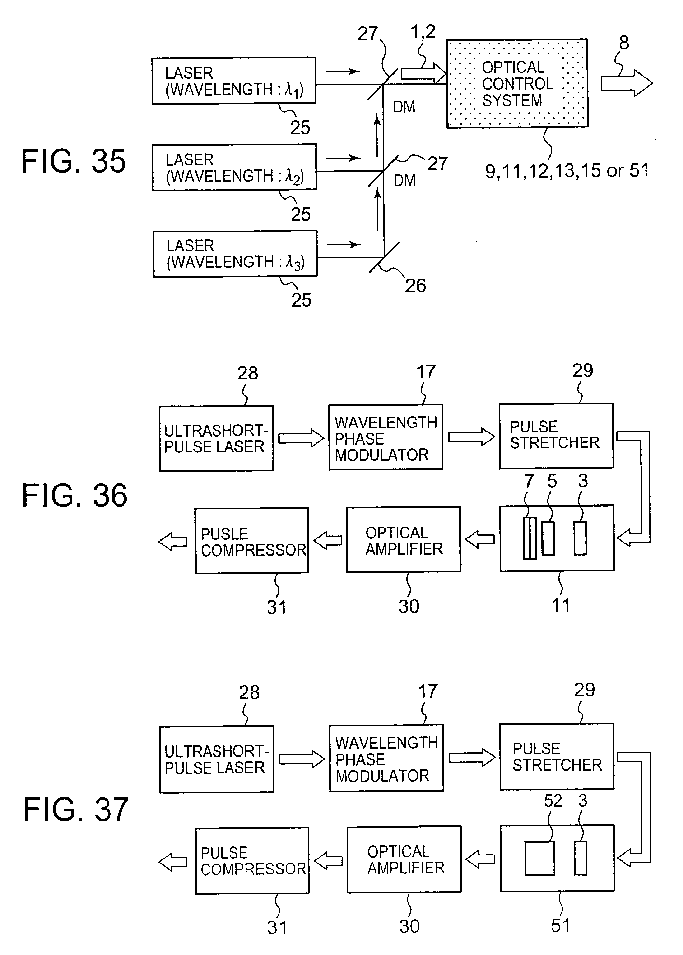

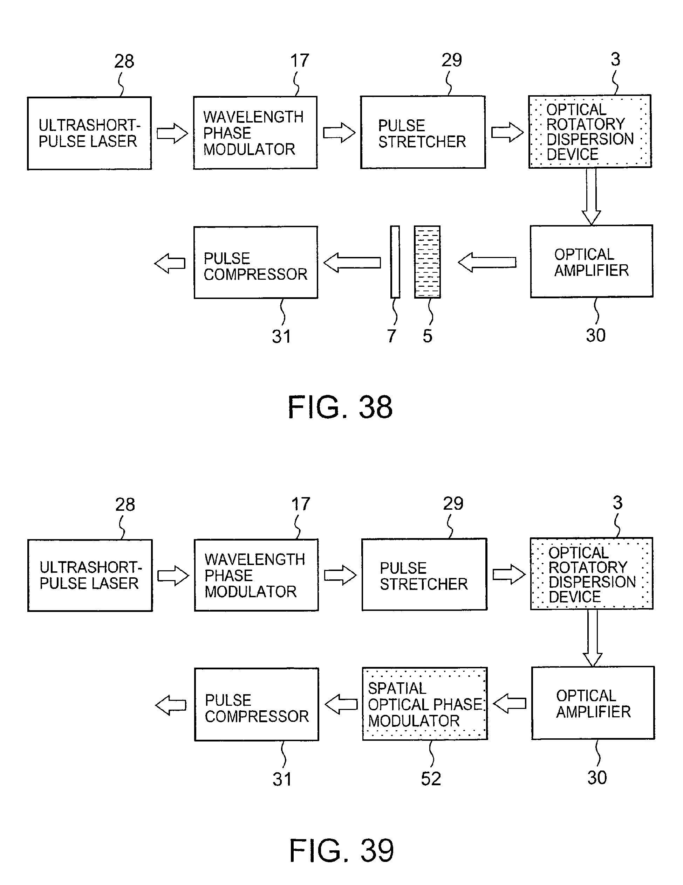

The foregoing optical control systems embodying the present invention can be used in combination with various light sources as shown in Figs. 35 to 39. An optical control system of the present invention applied to laser plasma x-ray generation will be described.

Laser plasma x-rays are generated when a target, such as a metal piece, is irradiated with a short-pulse high intensity laser beam. A mechanism of x-ray generation from a laser plasma will be described. When a target is irradiated with a laser beam, an irradiated part of the target changes into a plasma. Most part of the energy of the laser beam is absorbed by the electrons of the plasma at an initial stage. Therefore, the plasma thus produced contains high-temperature electrons and low-temperature ions. the high-temperature electrons excite the inner-shell electrons of the ions. When the excited inner-shell electrons relax to a lower energy level, x-rays of a wavelength corresponding to the level difference are radiated. The radiation of x-rays continues while the electrons are kept at temperatures high enough to excite the inner-shell electrons of the ions.

Normally, electrons of the plasma are in a state of local thermal equilibrium and the state distribution of the electrons can be approximated by a Boltzmann distribution. If the electron temperature is excessively high, the electrons having energy more than that necessary for exciting the inner-shell electrons increase and, consequently, a state unsuitable for generating x-rays of a specific wavelength is created. If the electron temperature is excessively low, the number of the electrons having energy sufficient to excite the inner-shell electrons decreases.

Therefore, there is an optimum electron temperature for the material of the target to make inner-shell electrons generate x-rays of a specific wavelength. Since there is an optimum temperature for generating x-rays of a specific wavelength, it is ideal that the control of laser plasma x-ray generation maintains an optimum electron temperature for the longest possible time in the widest possible range.

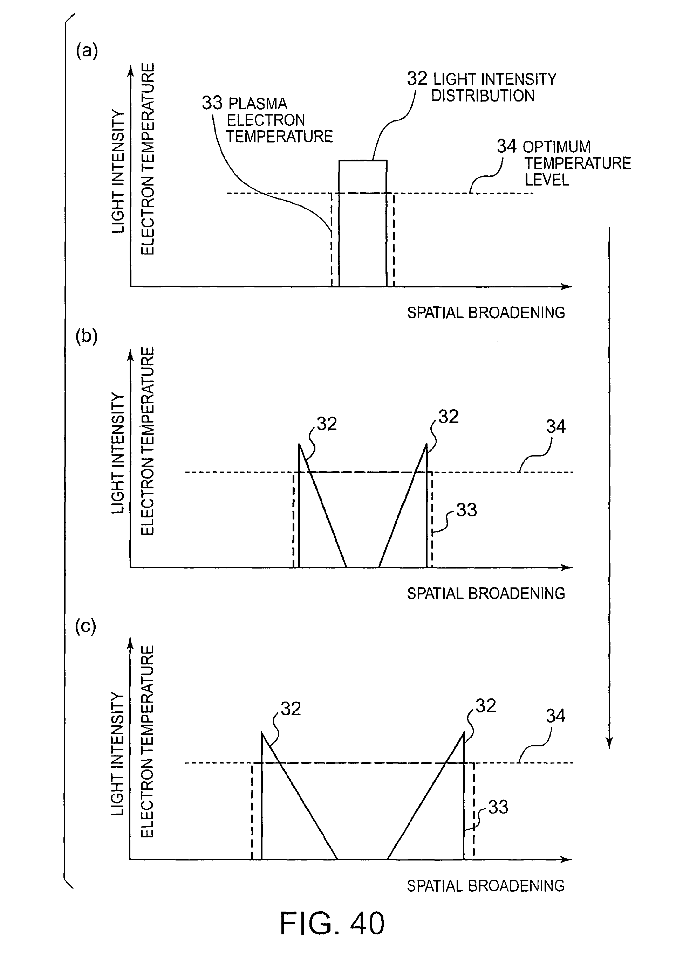

Fig. 40 is a diagram of assistance in explaining the ideal temporal development of laser plasma electron temperature for generating x-rays of a specific wavelength, in which spatial extension is measured on the horizontal axis and the light intensity distribution 32 of an irradiating laser beam and plasma electron temperature 33 are measured on the vertical axis. It is preferable that the plasma electron temperature 33 is maintained at an optimum temperature level 34 for x-ray generation while the plasma electron temperature 33 develops in the order of Figs. 40(a), 40(b) and 40(c).

In the laser plasma x-ray generator in this embodiment, it is preferable that the leading end of a pulse of the laser beam that reaches the target first has a pattern of spatial light intensity distribution 32 as shown in Fig. 40(a) showing the concentration of energy on a central part of the optical axis and the spatial light intensity distributions 32 of a series of pulses of the laser beam subsequently reaching the target expand following the expansion of the laser plasma as shown in Figs. 40(b) and 40(c) and become an annular light intensity distribution having a central part of a low light intensity and a peripheral part of a high light intensity.

The electron temperature 33 of the laser plasma can be maintained at the optimum temperature level 34 for generating x-rays of a specific wavelength in a wider space for a longer time by making the pulses of the laser beam form the foregoing spatial light intensity distribution. Consequently, x-rays of a desired wavelength can be efficiently generated.

When a target is irradiated with a laser beam emitted by the optical control system in this embodiment to generate x-rays, the spatial light intensity distribution of the laser beam at the position of the target and the intervals of irradiation can be properly adjusted. Consequently, an x-ray generating process can be minutely designed. The optical control system in this embodiment having the optical system simpler than that of the conventional optical control system can achieve substantially optimum laser plasma control and can precisely control the characteristics of the generated x-rays.

The wavelength characteristic as a strength characteristic of x-rays may be measured, and the light intensity distribution of the laser beam and the phases of the wavelength components may be adjusted on the basis of the measured light intensity of x-rays. Preferably, the generated x-rays have many proper wavelength components required by the use of the x-rays. The light intensity of x-rays of a desired wavelength may be measured, and the spatial light intensity distribution and the phases of the wavelength components may be adjusted so that the desired wavelength component has a high light intensity.

Fifth Embodiment

The optical control system of the present invention is capable of transforming a laser beam to generate a laser beam having wavelength components respectively having different spatial light strength distributions. The laser beam thus generated can be applied to an ultrahigh-resolution scanning laser fluorescence microscope of a STED system.

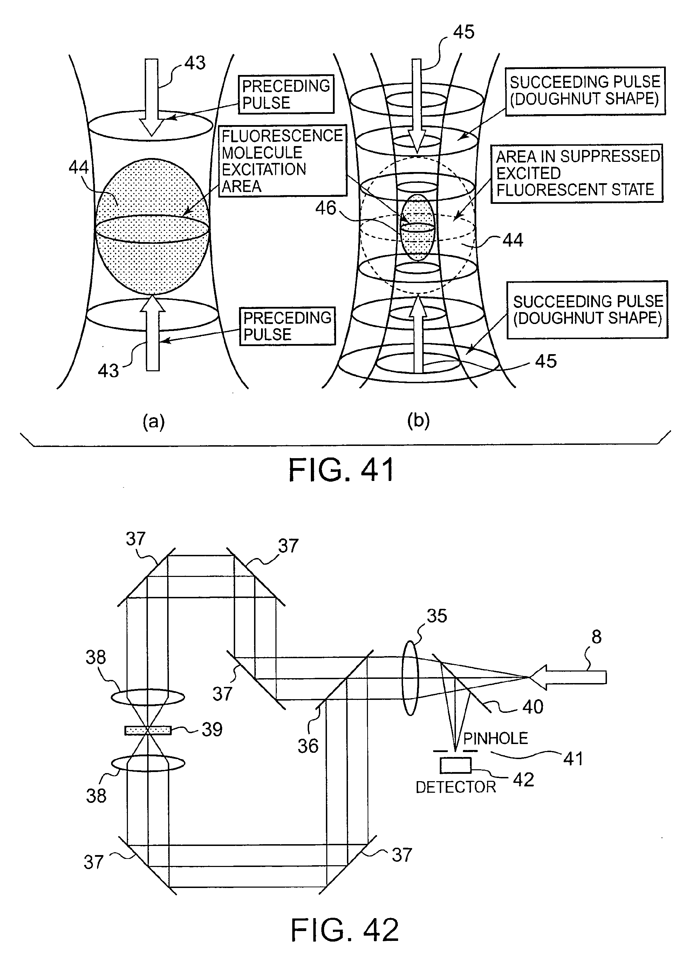

Fig. 41 is a diagrammatic view of assistance in explaining the mechanism of an ultrahigh-resolution scanning laser fluorescence microscope of a STED system. STED stands for stimulated emission depletion.

A scanning laser fluorescence microscope of a STED SYSTEM has a resolution higher than that of an ordinary scanning laser fluorescence microscope. An excitation light 43 as a leading pulse is projected on a fluorescence molecule excitation area 44 in a specimen, and an annular STED light beam 45 as a succeeding pulse is projected coaxially with the excitation light beam 43 on the specimen before a short time far shorter than fluorescence lifetime passes after the excitation of fluorescent molecules to suppress fluorescent light emission and a fluorescent light beam 46 of a size corresponding to the diameter of the central space of the annular STED light beam 45 is detected.

The scanning laser fluorescence microscope of a STED system can reduce the diameter of a scanning spot during observation to improve the resolution of the scanning laser fluorescence microscope of a STED system.

The conventional scanning laser fluorescence microscope of a STED system divides an ultrashort-pulse laser beam into two divisional laser beams after adjusting the wavelength of the ultrashort-pulse laser beam by an optical parametric amplifier (OPO), subjects one of the two divisional laser beams to wavelength conversion by a second harmonic generation (SHG) to use the same as a source light beam for fluorescence excitation and synthesizes the other divisional laser beam coaxially with the fluorescence excitation light beam processed by wavelength conversion by SHG. Therefore, the conventional scanning laser fluorescence microscope of a STED system needs a complicated optical system.

Fig. 42 is a diagrammatic view of an optical control system embodying the present invention applied to an laser fluorescence microscope of a STED system.

The optical control system of the present invention in this application separates a wavelength component of a wavelength equal to that of fluorescent light emitted by a specimen from light emitted by a light source and having wavelength components in a wide spectrum, delays the separated wavelength component to produce a STED light beam 45 that suppresses fluorescence by stimulated emission. The rest of the wavelength components are used as fluorescence excitation light 43.

The STED stimulated emission light beam is an annular beam and hence it is preferable to use a phase rotation beam. When a phase rotation beam is projected in one direction on a specimen, a torque acts on an observation unit. Therefore, a phase rotation beam of opposite phase rotation is projected in the opposite direction simultaneously with the former phase rotation beam.

An outgoing light beam 8 emerging from the optical control system of the present invention is collimated by a lens 35 and is divided into two half beams by a beam splitter 36. The two half beams travel two optical paths of the same optical path length, respectively, and are focused on a specimen 39 from opposite directions by two objectives 38, respectively.

Light emitted by the specimen 39 travels the optical paths in the reverse direction. The light emitted by the specimen 39 is focused by the lens 35, the focused light is reflected by a dichroic mirror 40, travels through a pinhole 41 and falls on a detector 42.

The laser fluorescence microscope of a STED system in this embodiment can provide two types of light beams, namely, the fluorescence excitation light beam 43 and the STED light beam 45 by the single optical system. Therefore, the fluorescence microscope of a STED system of the present invention, as compared with the conventional fluorescence microscope of a STED system, is simple in construction, can be made at a low cost and is easy to handle.

INDUSTRIAL APPLICABILITY

The optical control system of the present invention continuously changes the spatial light intensities of the wavelength components of a light beam and hence can easily change the color characteristic of an outgoing light beam so that the outgoing light beam has a desired color characteristic selected from various color characteristics. Thus the light beam emerging from the optical control system can be used by various illumination devices and various displays. Thus the optical control system promotes the use of light in various industries.

Since the spatial intensity distribution and temporal waveform of a laser light pulse can be continuously and minutely adjusted, the highly accurate control of a laser reaction process can be achieved. Thus the optical control system of the present invention promotes the use of light in various industries.

When the x-ray generator of the present invention is used for radiating x-rays by producing a plasma with a laser beam, the intensity of the x-rays can be adjusted and, particularly, the intensity of x-rays of a specific wavelength can be selectively adjusted. When the present invention is applied to an ultrahigh-resolution microscope of a STED system, the single optical system can produce a fluorescence excitation light beam and a STED light beam. Thus the optical control system of the present invention has simple construction.

Claims

1. An optical control system comprising:

an azimuth rotator having an optical rotatory dispersion characteristic that changes optical rotation angle according to wavelength;
a spatial light modulator having an entrance surface capable of changing the optical rotation angle of the polarization plane of an incident light wave or an entrance surface having parts capable of individually changing the optical rotation angle of the polarization plane of an incident light wave; and
an analyzer;
wherein the azimuth rotator, the spatial light modulator and the analyzer are arranged so that an incident light wave containing a plurality of wavelength components passes the azimuth rotator, the spatial light modulator and the analyzer in that order,
the azimuth rotator transmits the incident linearly polarized light wave and gives optical rotation angles respectively to the wavelength components,
the linearly polarized light wave passed through the azimuth rotator is passed through the spatial light modulator with the entire entrance surface or with parts of the entrance surface having optical rotatory power corresponding to the optical rotation angle of one of the wavelength components,
the spatial light modulator adjusts the optical rotation angles of the polarization planes of the wavelength components so as to be in a predetermined relation with the direction of the analyzer, and

an outgoing light wave emerging from the analyzer contains wavelength components respectively having different spatial light intensities.

2. The optical control system according to claim 1 further comprising a polarizer disposed on the entrance side of the azimuth rotator,

wherein the polarizer converts an incident light wave containing a plurality of wavelength components, having an optional polarization characteristic and fallen thereon into a linearly polarized light wave containing a plurality of wavelength components having the same polarization plane, and

the analyzer gives different spatial light intensities respectively to the wavelength components of the linearly polarized light wave received from the spatial light modulator.

3. The optical control system according to claim 1, wherein a surface perpendicular to the optical axis of the spatial light modulator are divided into a plurality of sections, and the sections of the spatial light modulator are capable of individually changing the optical rotation angle of the polarization plane of an incident light wave.

4. The optical control system according to claim 1, wherein the optical rotation angle of the spatial light modulator or optical rotation angle distribution in a near field pattern or a far field pattern is changed.

5. The optical control system according to claim 1, wherein the spatial light modulator is a twisted nematic liquid crystal.

6. The optical control system according to any one of claims 3 to 5, wherein the rotation angle for the polarization plane of the light wave passing through the spatial light modulator changes stepwise or continuously from the center of the spatial light modulator on the optical axis radially outward with distance from the center of the spatial light modulator in an axisymmetric rotation angle distribution.

7. The optical control system according to claim 1, ' wherein a spatial phase modulating operation caused by the control of spatial light intensity distribution by the spatial light modulator is adjusted.

8. An optical control system comprising:

an azimuth rotator having an optical rotatory dispersion characteristic that changes optical rotation angle according to wavelength; and
a spatial optical phase modulator having an entrance surface capable of controlling the wave surface of an incident light wave or an entrance surface having parts capable of individually controlling the wave surface of an incident light wave to adjust the spatial phase distribution of the incident light wave;

wherein the incident light wave passes the azimuth rotator and the spatial optical phase modulator in that order,

the azimuth rotator transmits an incident linearly polarized light wave containing a plurality of wavelength components and gives optical rotation angles respectively to the wavelength components,

the linearly polarized light wave passed through the azimuth rotator is passed through the spatial optical phase modulator with an entrance surface having an spatial optical phase modulation degree or with an entrance surface having parts adjusted respectively to spatial optical phase modulation degrees,

the spatial optical phase modulator produces an outgoing light wave having adjusted ratios of light quantities subject to spatial optical phase modulation for the wavelength components, and the wavelength components form different far field patterns, respectively.

9. The optical control system according to claim 8, wherein the spatial optical phase modulator is a two-dimensional optical phase modulator that modulates the phase of only a polarized light component polarized in a direction parallel to one of two perpendicularly intersecting coordinate axes defining a plane perpendicular to the optical axis of the incident light wave.

10. The optical control system according to claim 8, wherein the spatial optical phase modulator is a parallel oriented nematic liquid crystal spatial light modulator.

11. The optical control system according to claim 8, wherein the azimuth rotator gives different polarization angles respectively to the polarized wavelength components of the incident light wave by using an optically rotatory dispersion effect to emit a light wave having different ratios between two polarized components distributed along perpendicularly intersecting reference coordinate axes contained in a plane perpendicular to the optical axis for the wavelength components, and

the spatial optical phase modulator receives the light wave emerging from the azimuth rotator and emits an outgoing light wave having an adjusted ratio between polarized components undergone spatial phase modulation and having light surfaces having shaped spatial shape and polarized components not undergone spatial phase modulation and having wave surfaces having unchanged spatial shapes.

12. The optical control system according to claim 1 or 8, wherein the spatial phase modulating action of the spatial light modulator forms a spiral spatial optical phase distribution in the outgoing light wave and a phase shift for one full turn about the optical axis is approximately equal to an integral multiple of $2\pi$ rad.

13. The optical control system according to claim 1 or 8 further comprising a wavelength phase modulator capable of adjusting the respective optical phases of the wavelength components.

14. The optical control system according to claim 13, wherein the adjusting operation of the wavelength phase modulator for the adjustment of the optical phases of the wavelength components is performed simultaneously with the adjusting operation the azimuth rotator, the spatial light modulator or the spatial optical phase modulator to control the phases, and the spatial light intensity distributions or spatial optical phase distributions of the wavelength components of the outgoing light wave simultaneously.

15. The optical control system according to claim 1 or 8, wherein the azimuth rotator is a Faraday rotator.

16. The optical control system according to claim 1 or 8, wherein the azimuth rotator is an optical device made of a natural optical rotatory material.

17. The optical control system according to claim 1 or 8, wherein the azimuth rotator is an optical device made of a liquid crystal.

18. The optical control system according to claim 1 or 8, wherein the optical rotatory dispersion angle of a light wave passed through the azimuth rotator is 90° at a maximum.

19. The optical control system according to claim 1 or 8, wherein the effect of combination of the plurality of wavelength components of the outgoing light wave respectively having different spatial distributions is applied to various process control purposes.

20. The optical control system according to claim 19 wherein the laser plasma x-ray generating rate of a laser plasma x-ray generator is controlled by making the leading end of a light pulse first arriving at a target of the laser plasma x-ray generator have a spatial light intensity distribution concentrating energy on a central part of the optical axis, and by making a series of light pulses subsequently reaching the target have annular spatial distributions having a central part of a low light intensity and a peripheral part of a high light intensity.

21. The optical control system according to claim 19, wherein a wavelength component of the same wavelength as a fluorescent light wave in a broad-band spectrum is used for fluorescence suppression, and wavelength components of other wavelengths are used as fluorescence excitation light waves in an ultrahigh-resolution scanning fluorescence microscope of a STED system.

22. An optical control method comprising the steps of:

making a linearly polarized light wave containing a plurality of wavelength components fall on an azimuth rotator having an optical rotatory dispersion characteristic to determine different polarization angles for the wavelength components, respectively, to give different polarization angles respectively to the wavelength components;
passing the linearly polarized light wave passed through the azimuth rotator through a spatial light modulator to give an optical rotation angle to an entrance surface or optical rotation angles to parts of an entrance surface; and
passing the linearly polarized light wave passed through the spatial light modulator through an analyzer to emit an outgoing light wave containing wavelength components respectively having controlled spatial light intensity distributions.

23. An optical control method comprising the steps of:

making a linearly polarized light wave containing a plurality of wavelength components fall on an azimuth rotator having an optical rotatory dispersion characteristic to give different polarization angles respectively to the wavelength components;
passing the linearly polarized light wave passed through the azimuth rotator through a spatial optical phase modulator to change the spatial optical phase of the incident light wave on an entrance surface or the spatial optical phases of the incident light wave on parts of an entrance surface; and
emitting an outgoing light wave containing wavelength components having controlled spatial light intensity distributions.

24. The optical control method according to claim 22 or 23 further comprising the step of adjusting the respective optical phases of the wavelength components by a wavelength phase modulator.

25. The optical control method according to claim 24, wherein spatial optical phase distributions are simultaneously controlled.

**26.** The optical control method according to claim 24, the adjustment of the respective optical phases of the wavelength components by the wavelength phase modulator is carried out simultaneously with the adjustment of the spatial light intensity by the azimuth rotator, the spatial light modulator or the spatial optical phase modulator to control the phases of the wavelength components of the outgoing light wave, and the spatial light intensity distribution or the spatial optical phase distribution of the outgoing light wave simultaneously.

FIG. 1

FIG. 2

FIG. 3

(BINARY DISTRIBUTION)

(HALF-TONE DISTRIBUTION)

(a)

(b)

FIG. 4

FIG. 5

FIG. 6

## FIG. 7

## FIG. 8

EP 1 662 296 A1

NEAR FIELD PATTERN (GAUSSIAN DISTRIBUTION, POLARIZATION ANGLE : 0° )

FIG. 9

FAR FIELD PATTERN (GAUSSIAN DISTRIBUTION, POLARIZATION ANGLE :0° )

FIG. 10

EP 1 662 296 A1

CROSS SECTION OF NEAR FIELD PATTERN (GAUSSIAN DISTRIBUTION, POLARIZATION ANGLE : 45° )

FIG. 11

EP 1 662 296 A1

CROSS SECTION OF FAR FIELD PATTERN (GAUSSIAN DISTRIBUTION, POLARIZATION ANGLE : 45°)

FIG. 12

EP 1 662 296 A1

EP 1 662 296 A1

CROSS SECTION OF NEAR FIELD PATTERN (GAUSSIAN DISTRIBUTION, POLARIZATION ANGLE : 90° )

LIGHT INTENSITY (W/cm²)

DISTANCE ALONG RADIUS VECTOR (μm)

FIG. 13

CROSS SECTION OF FAR FIELD PATTERN (GAUSSIAN DISTRIBUTION, POLARIZATION ANGLE: 90° )

FIG. 14

EP 1 662 296 A1

NEAR FIELD PATTERN

LIGHT INTENSITY (W/cm²)

DISTANCE ALONG RADIUS VECTOR (cm)

OPTICAL ROTATORY DISPERSION ANGLE (°)

FIG. 15

EP 1 662 296 A1

FAR FIELD PATTERN

LIGHT INTENSITY (W/cm²)

DISTANCE ALONG RADIUS VECTOR (μm)

OPTICAL ROTATORY DISPERSION ANGLE (°)

FIG. 16

EP 1 662 296 A1

FIG. 17

FAR FIELD PATTERN

FIG. 18

FIG. 19

**FIG. 20**

**FIG. 21**

**FIG. 22**

FIG. 23

FIG. 24

NEAR FIELD PATTERN

FIG. 25

SPATIAL DISTRIBUTION OF NEAR FIELD PHASE (HELICAL PITCH : $2\pi$ rad)

FIG. 26

FAR FIELD PATTERN

FIG. 27

EP 1 662 296 A1

CROSS SECTION OF FAR FIELD PATTERN (HELICAL PHASE, POLARIZATION ANGLE : 0° )

FIG. 28

EP 1 662 296 A1

CROSS SECTION OF FAR FIELD PATTERN (HELICAL PHASE, POLARIZATION ANGLE : 20°)

FIG. 29

EP 1 662 296 A1

CROSS SECTION OF FAR FIELD PATTERN (HELICAL PHASE, POLARIZATION ANGLE : 90° )

FIG. 30

EP 1 662 296 A1

CROSS SECTION OF NEAR FIELD PATTERN (HELICAL PHASE, CIRCULAR PLANE WAVE)

LIGHT INTENSITY (W/cm$^2$)

DISTANCE ALONG RADIUS VECTOR (cm)

POLARIZATION ANGLE ($^\circ$ )

FIG. 31

FAR FIELD PATTERN (HELICAL PHASE, CIRCULAR PLANE WAVE)

FIG. 32

EP 1 662 296 A1

NEAR FIELD PATTERN (HELICAL PHASE, GAUSSIAN FUNCTION DISTRIBUTION)

FIG. 33

EP 1 662 296 A1

FAR FIELD PATTERN (HELICAL, GAUSSIAN FUNCTION DISTRIBUTION)

FIG. 34

## FIG. 35

LASER (WAVELENGTH : $\lambda_1$) 25

27

1,2

DM

OPTICAL CONTROL SYSTEM

8

9,11,12,13,15 or 51

LASER (WAVELENGTH : $\lambda_2$) 25

27

DM

LASER (WAVELENGTH : $\lambda_3$) 25

26

## FIG. 36

28
ULTRASHORT-PULSE LASER

17
WAVELENGTH PHASE MODULATOR

29
PULSE STRETCHER

7 5 3

11

31
PUSLE COMPRESSOR

30
OPTICAL AMPLIFIER

## FIG. 37

28
ULTRASHORT-PULSE LASER

17
WAVELENGTH PHASE MODULATOR

29
PULSE STRETCHER

52 3

51

31
PULSE COMPRESSOR

30
OPTICAL AMPLIFIER

28                    17                    29                    3

| ULTRASHORT-PULSE LASER | ⇒ | WAVELENGTH PHASE MODULATOR | ⇒ | PULSE STRETCHER | ⇒ | OPTICAL ROTATORY DISPERSION DEVICE |

| ⇐ | PULSE COMPRESSOR | ⇐ | ⇐ | OPTICAL AMPLIFIER |

31        7   5                    30

# FIG. 38

28                    17                    29                    3

| ULTRASHORT-PULSE LASER | ⇒ | WAVELENGTH PHASE MODULATOR | ⇒ | PULSE STRETCHER | ⇒ | OPTICAL ROTATORY DISPERSION DEVICE |

| ⇐ | PULSE COMPRESSOR | ⇐ | SPATIAL OPTICAL PHASE MODULATOR | ⇐ | OPTICAL AMPLIFIER |

31                    52                    30

# FIG. 39

(a)

LIGHT INTENSITY
ELECTRON TEMPERATURE

33 PLASMA
ELECTRON
TEMPERATURE

32 LIGHT INTENSITY
DISTRIBUTION

34 OPTIMUM
TEMPERATURE
LEVEL

SPATIAL BROADENING

(b)

LIGHT INTENSITY
ELECTRON TEMPERATURE

32          32          34

33

SPATIAL BROADENING

(c)

LIGHT INTENSITY
ELECTRON TEMPERATURE

32          32          34

33

SPATIAL BROADENING

FIG. 40

(a)  (b)

FIG. 41

FIG. 42

## INTERNATIONAL SEARCH REPORT

| | International application No. |
|---|---|
| | PCT/JP2004/012643 |

A.  CLASSIFICATION OF SUBJECT MATTER
    Int.Cl⁷ G02F1/01, G02F1/13, G02B21/00, G01N21/64

According to International Patent Classification (IPC) or to both national classification and IPC

B.  FIELDS SEARCHED

Minimum documentation searched (classification system followed by classification symbols)
    Int.Cl⁷ G02F1/01, G02F1/13, G02B21/00, G01N21/64

Documentation searched other than minimum documentation to the extent that such documents are included in the fields searched
    Jitsuyo Shinan Koho        1922-1996    Toroku Jitsuyo Shinan Koho    1994-2004
    Kokai Jitsuyo Shinan Koho  1971-2004    Jitsuyo Shinan Toroku Koho    1996-2004

Electronic data base consulted during the international search (name of data base and, where practicable, search terms used)
    JSTPuls(JOIS)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 55-126213 A   (N.V. Philips'<br>Gloeilampenfabrieken),<br>29 September, 1980 (29.09.80),<br>Full text; all drawings<br>(Family: none) | 1-4,15-19,22<br>5<br>6-14,20,21,<br>23-26 |
| Y | JP 11-24032 A  (Casio Computer Co., Ltd.),<br>29 January, 1999 (29.01.99),<br>Par. Nos. [0051] to [0060]<br>& US 6038001 A<br>Column 15, line 26 to Par. No. [0016], line 61 | 5 |

☒  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 November, 2004 (30.11.04) | 14 December, 2004 (14.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 662 296 A1**

| | **INTERNATIONAL SEARCH REPORT** | International application No. |
|---|---|---|
| | | PCT/JP2004/012643 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-35980 A (Matsushita Electric Industrial Co., Ltd.), 05 February, 2002 (05.02.02), Par. Nos. [0033] to [0052]; Figs. 1 to 4 (Family: none) | 6,12 |
| A | JP 2003-156709 A (Toshiba Corp.), 30 May, 2003 (30.05.03), Par. Nos. [0046] to [0073]; Fig. 7 (Family: none) | 6,12 |
| A | JP 11-504441 A (The Board of Regents of the University of Colorado), 20 April, 1999 (20.04.99), Full text; all drawings & WO 96/37806 A1 & US 5751384 A & AU 5803196 A & DE 69616312 T & EP 827599 B1 | 1-26 |
| A | JP 11-515117 A (KAJ LLC.), 21 December, 1999 (21.12.99), Full text; all drawings & WO 97/16763 A1 & US 5870159 A | 1-26 |
| A | JP 11-326860 A (Olympus Optical Co., Ltd.), 26 November, 1999 (26.11.99), Par. Nos. [0010] to [0021]; Figs. 1 to 5 (Family: none) | 11 |
| A | Fumihiko KAMINARI et al., "Adaptive Seigyo ni yoru Femtosecond Laser Pulse Seikei to Hikari Reiki Katei eno Oyo", The Review of Laser Engineering, 15 August, 2000 (15.08.00), Vol.28, No.8, pages 479 to 485 | 14,24,26 |
| A | JP 2002-289397 A (Takayasu MOCHIZUKI), 04 October, 2002 (04.10.02), Par. Nos. [0002], [0027], [0028]; Fig. 1 & US 2002/141537 A1 Par. Nos. [0003], [0044] to [0048]; Fig. 1 | 20 |
| A | R.M. STEVENSON et al., Binary-phase zone plate arrays for the generation of uniform focal profiles, OPTICS LETTERS, 15 March, 1994 (15.03.94), Vol.19, No.6, pages 363 to 365 | 20 |
| A | JP 2002-62261 A (Olympus Optical Co., Ltd.), 28 February, 2002 (28.02.02), Full text; all drawings & US 2002/141052 A1 | 21 |

Form PCT/ISA/210 (continuation of second sheet) (January 2004)

53

**INTERNATIONAL SEARCH REPORT**

| International application No. |
| --- |
| PCT/JP2004/012643 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 11-95120 A (Olympus Optical Co., Ltd.), 09 April, 1999 (09.04.99), Full text; all drawings & US 6184535 B1 | 21 |
| E,A | JP 2003-270551 A (Kawasaki Heavy Industries, Ltd.), 25 September, 2003 (25.09.03), Par. Nos. [0039], [0040]; Fig. 6 (Family: none) | 1-21 |
| E,A | JP 2003-272892 A (Kawasaki Heavy Industries, Ltd.), 26 September, 2003 (26.09.03), Par. Nos. [0008] to [0019] (Family: none) | 1-21 |

Form PCT/ISA/210 (continuation of second sheet) (January 2004)

**INTERNATIONAL SEARCH REPORT**

International application No.

PCT/JP2004/012643

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

```
   Document 1: JP 55-126213 A (N.V. Philips' Gloeilampenfabrieken),
29.September.1980, (29.09.80) full text, all drawings (family; none)

   A matter common to claims 1-26 is an optical control device provided with
an optical rotator having an optical rotation dispersion characteristics and
a spatial modulation element.

(continued to extra sheet)
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**          ☒    The additional search fees were accompanied by the applicant's protest.

☐    No protest accompanied the payment of additional search fees.

Form PCT/ISA/210 (continuation of first sheet (2)) (January 2004)

| **INTERNATIONAL SEARCH REPORT** | International application No. |
|---|---|
| | PCT/JP2004/012643 |

Continuation of Box No.III of continuation of first sheet(2)

However, our search has found that this common matter is disclosed in document 1 and is clearly not novel. Consequently the common matter is not a special technical feature within the meaning of PCT Rule 13.2, second sentence, since it makes no contribution over the prior art. Therefore, there exists no matter common to all the claims.

Although in claims 1-7 the constitution in claim 1 is common, it is disclosed in document 1, and therefore this common matter is not a special technical feature. Therefore, there exists no matter common to all the claims 1-7 within the meaning of PCT Rule 13.2, second sentence.

Claims 1-26 are classified as follows:

Claims 1-5, 22
No contribution is made over the prior art, or a spatial modulation element is a TN liquid crystal.

Claim 6
The rotation angle of a polarization plane gives, in an axially symmetrical (concentric) way, a step-wise or continuous change.

Claims 7-11, 23-26
A spatial phase modulation action is adjusted, or a spatial phase modulation element is passed through. Although claims 24-26 also refer to claim 22, claim 22 makes no contribution over the prior art as mentioned above.

Claims 12-21
Those inventions in claims 12-21 that refer to claim 8 share a matter with claim 8. Those referring to claim 1 are further classified as follows since a matter common (that is, claim 1) to all claims 12-21 makes no contribution over the prior art as mentioned above.

Claims 12
The spatial phase distribution of an outgoing light has a spiral-stair shape. Classified in the same category as that of claims 7, 8, 23-26.

Claims 13 and 14
Provided with a wavelength-based phase modulation element. Classified in the same category as that of claims 7, 8, 23-26.

Claims 15-19
No contribution is made over the prior art, or an optical rotator is liquid crystal.

Claim 20
An optical control device for controlling a laser plasma X-ray generation amount.

Claim 21
An optical control device in a scanning type fluorescent control system ultra-resolution microscope.
(continued to next page)

Form PCT/ISA/210 (extra sheet) (January 2004)

**INTERNATIONAL SEARCH REPORT**

International application No.

PCT/JP2004/012643

Continuation of Box No.III of continuation of first sheet(2)

Therefore, since there exists among claims 1-5, 15-19, 22, claim 6, claims 7-14, 23-26, claims 20, claim 21 no other common feature to be considered to be a special technical feature within the meaning of PCT Rule 13.2, second sentence, no technical relationship within the meaning of PCT Rule 13 can be found among those different inventions.

Therefore, it is clear that claims 1-5, 15-19, 22, claim 6, claims 7-14, 23-26, claims 20, claim 21 do not mutually fulfill the requirement of unity of invention.

Form PCT/ISA/210 (extra sheet) (January 2004)